# EUROPÄISCHE PATENTSCHRIFT

(11) **EP 3 990 211 B1**
(45) Veröffentlichungstag und Bekanntmachung des Hinweises auf die Patenterteilung: **06.12.2023**
(21) Anmeldenummer: 21718790.5
(22) Anmeldetag: 12.04.2021
(51) Int. Cl.: B23K 26/06, B23K 26/073, B23K 26/067, B23K 26/066

(54) **OPTISCHE VORRICHTUNG, VERFAHREN UND VERWENDUNG**
OPTICAL DEVICE, METHOD AND USE
DISPOSITIF OPTIQUE, PROCÉDÉ ET UTILISATION

(30) Priorität: 11.04.2020 DE 102020204656
(43) Veröffentlichungstag der Anmeldung: 04.05.2022
(73) Patentinhaber: SurFunction GmbH, 66123 Saarbrücken (DE); DLIP UG, 66740 Saarlouis (DE)
(72) Erfinder: BOGDAN, Voisiat, 01067 Dresden (DE); LASAGNI, Andrés, Fabián, 01723 Grumbach (DE)
(74) Vertreter: Lichti - Patentanwälte Partnerschaft mbB
(86) Internationale Anmeldenummer: PCT/EP2021/059422
(87) Internationale Veröffentlichungsnummer: WO 2021/205036

(56) Entgegenhaltungen:
- CN-A- 106 094 226
- DE-A1-102017 205 889
- JP-A- 2003 334 683
- JP-A- 2006 122 927
- US-A1- 2013 153 553
- US-A1- 2014 291 308

## Beschreibung

Die Erfindung betrifft eine optische Vorrichtung, ein Verfahren und eine Verwendung der optischen Vorrichtung zur Interferenzstrukturierung einer Probe.

Im Sinne der Erfindung handelt es sich bei Proben beispielsweise um Bauteile, die in komplexere Komponenten eingebaut werden und im Zuge ihrer Verarbeitung mit einer verhältnismäßig großflächigen Struktur versehen werden sollen.

Im Sinne der Produktivität ist es gewünscht, die Strukturierung großflächig und in möglichst kurzer Zeit auszubilden.

Zu diesem Zweck ist es bekannt, die Strukturierung der Probe mittels Interferenzstrukturierung vorzusehen, wobei ein Laserstrahl in zwei Teilstrahlen aufgeteilt wird, die mittels weiterer optischer Komponenten in einem Strukturbereich der Probe miteinander interferieren, wobei sich die Strukturierung der Probe infolge der räumlichen interferometrischen Energieverteilung der miteinander interferierenden Teilstrahlen ausbildet. Eine derartig bekannte Vorrichtung ist beispielsweise in der EP 2 596 899 A2 oder der US 2014/291308 A1 (Basis für den Oberbegriff des Anspruchs 1) offenbart, wodurch insbesondere Strukturen mit linienförmigen Strukturelementen ausgebildet werden können. Aufgrund der Vielzahl an optischen Elementen ist die bekannte Vorrichtung teuer und anfällig für Fehljustierungen. So muss bei der Formung und Auslenkung der einzelnen Teilstrahlen ein besonders hoher Aufwand betrieben und die Winkel bei der Strahlauslenkung der Teilstrahlen sehr genau eingehalten werden. Dies ist besonders kompliziert, wenn während einer Bearbeitung Parameter geändert werden sollen, um gezielt Einfluss auf Veränderungen an einzelnen Strukturen oder Strukturelementen vorzunehmen. Daneben ist die Differenz der von den Teilstrahlen zurückgelegten Weglängen derart groß, dass insbesondere bei gepulster Laserstrahlung mit kurzen oder gar ultrakurzen Pulsdauern die Kohärenzlänge der Laserstrahlung überschritten wird, so dass keine Interferenz der Teilstahlen, und damit keine Strukturierung der Probe, erfolgt. Die bekannte Vorrichtung eignet sich daher insbesondere nicht für ultrakurze Laserpulse, deren zeitliche Pulsdauern im Femtosekunden- und/oder im Pikosekundenbereich liegen.

Die Aufgabe der Erfindung kann daher darin gesehen werden, eine verbesserte Vorrichtung vorzusehen, die unter Beseitigung der Nachteile aus dem Stand der Technik eine effizientere Interferenzstrukturierung der Probe ermöglicht, die insbesondere eine vereinfachte und kostengünstigere Handhabe bietet und die insbesondere eine Interferenzstrukturierung der Probe bei kurzen Pulsdauern ermöglicht. Entsprechendes gilt verfahrens- und verwendungsmäßig.

Die Aufgabe der Erfindung wird gelöst durch eine optische Vorrichtung zur Interferenzstruktierung einer Probe gemäß Anspruch 1.

Die Aufgabe der Erfindung wird daneben durch ein Verfahren zur Interferenzstruktierung einer Probe nach Anspruch 11 gelöst.

Außerdem wird die Aufgabe der Erfindung gelöst durch die Verwendung einer erfindungsgemäßen Vorrichtung zur Interferenzstrukturierung einer Probe, insbesondere eines Bauteils.

Die Erfindung basiert auf dem Grundgedanken, dass durch die erfindungsgemäße Ausrichtung der Zylinderachsen der mindestens einen ersten, der mindestens einen zweiten und der mindestens einen dritten Zylinderlinse gezielt eine Manipulation des Laserstrahls, einschließlich seiner Teilstrahlen, in einer ersten Ebene möglich ist, die die optische Achse umfasst und normal zur Zylinderachse der mindestens einen ersten Zylinderlinse angeordnet ist, ohne dass der Strahlengang des Laserstrahls in einer zweiten Ebene, die senkrecht zur ersten Ebene angeordnet ist, beeinflusst wird. Damit kann besonders einfach und effizient Einfluss auf die Interferenzstrukturierung der Probe genommen werden. Die Handhabung der erfindungsgemäßen Vorrichtung ist dadurch deutlich gegenüber den bekannten Vorrichtungen vereinfacht. Entsprechendes gilt für das erfindungsgemäße Verfahren und die erfindungsgemäße Verwendung. Ein weiterer Vorteil der erfindungsgemäßen Vorrichtung ergibt sich aus der Tatsache, dass die Wegdifferenz der Teilstrahlen verhältnismäßig gering ist, daher die Kohärenzlänge der Laserstrahlung nicht überschritten wird, so dass insbesondere bei Laserstrahlung mit kurzen und/oder ultrakurzen Laserpulsen eine Interferenz der Teilstrahlen erfolgt und damit eine Interferenzstrukturierung der Proben möglich ist. Die erfindungsgemäße Vorrichtung eignet daher besonders für Laserstrahlung mit kurzen Pulsdauern.

Im Sinne der Erfindung bezeichnet Interferenzstrukturierung die Strukturierung der Probe mittels Interferenz mindestens zweier Laserstrahlen. Die sich durch die Interferenz der Teilstrahlen ausbildende räumliche Energieverteilung wechselwirkt mit dem Probenmaterial derart, dass die Strukturierung der Probe entsprechend der Energieverteilung der Interferenzstruktur vorgenommen wird. Insbesondere kann damit eine Strukturierung der Probe mit linienförmigen Strukturelementen vorgenommen werden, die in einer Strukturperiode angeordnet sind. Insofern umfasst Interferenzstrukturierung sowohl einen Materialabtrag der Probe, beispielsweise mittels Ablation, als auch eine gezielte Veränderung des Probenmaterials, etwa durch Photopolymerisierung. Darüber hinaus können durch die Interferenzstruktierung ein gezieltes Umschmelzen und/oder eine gezielte Veränderung der chemischen Zusammensetzung und/oder eine Veränderung der (Kristall-)Struktur des Probenmaterials erfolgen. Die Strukturierung der Probe erfolgt im Sinne der Erfindung beispielsweise auf der Probenoberfläche und/oder innerhalb des Probenvolumens, wobei insbesondere die Probe lithographisch durch die Interferenzstrukturierung bearbeitet werden kann, was auch als Interferenzlithographie bezeichnet wird. Die Strukturierung der Probe dient insbesondere dazu, die Probe mit einer technischen Funktion, einem ästhetischen Eindruck und/oder einer Kennzeichnung zu versehen. Strahlaufwärts bezeichnet im Sinne der Erfindung eine Richtung gegen die Ausbreitungsrichtung des Laserstrahls, die damit dem Laser zugewandt ist. Entsprechend bezeichnet strahlabwärts eine dem Laser abgewandte Richtung.

Der Laser kann als diodengepumpter Festkörperlaser ausgestaltet sein und insbesondere gepulste Laserstrahlung emittieren, wobei die Laserpulse eine zeitliche Pulsdauer im Femtosekunden-, Pikosekunden- und/oder Nanosekundebbereich und Wellenlängen im UV-, VIS- und/oder IR-Bereich aufweisen können. Bekanntlich werden Laserpulse mit einer zeitlichen Pulsdauer im Femtosekunden- und/oder Pikosekundenbereich als ultrakurze Pulse bezeichnet. Vorzugsweise beträgt die zeitliche Pulsdauer der Laserpulse zwischen 10 fs und 10 ms. Der Laser emittiert vorzugsweise kollimierte Laserstrahlung, die insbesondere parallel zur optischen Achse ausgerichtet ist.

Der Strahlteiler ist vorzugsweise als diffraktives optisches Element, insbesondere als Gitter ausgestaltet. Alternativ kann der Strahlteiler als Prisma oder als beispielsweise halbdurchlässiger Spiegel ausgestaltet sein. Vorzugsweise ist der Spiegel als teilreflektierender Spiegel ausgestaltet. Die mindestens zwei Teilstrahlen sind insbesondere in einer gemeinsamen Ebene angeordnet, die die optische Achse umfasst und die normal zur Zylinderachse der mindestens einen ersten Zylinderlinse angeordnet ist. Für eine einfache Ausgestaltung der Vorrichtung können mindestens zwei Teilstrahlen jeweils eine Ausbreitungsrichtung aufweisen, die jeweils zur der optischen Achse in dem gleichen Winkel angeordnet ist. In einer Weiterbildung der Erfindung sind die mindestens zwei Teilstrahlen intensitätsmäßig gleichmäßig aufgeteilt, so dass beispielsweise die Intensität des ersten Teilstrahls im Wesentlichen gleich der Intensität des zweiten Teilstrahls ist.

Im Sinne der Erfindung bezeichnet der Interferenzwinkel jener Winkel, unter dem ein Teilstrahl nach der mindestens einen zweiten Zylinderlinse relativ zur optischen Achse zum Interferenzbereich gebrochen wird. Der Interferenzwinkel kann sich, aufgrund der erfindungsgemäßen Manipulierbarkeit der Teilstrahlen in der ersten und zweiten Ebene unabhängig voneinander, auf die erste Ebene, beispielsweise die yz-Ebene, und/oder auf die zweite Ebene, beispielsweise die xz-Ebene, beziehen. Der Interferenzwinkel kann veränderbar sein, um die Strukturperiode des Interferenzmusters zu ändern. Zu diesem Zweck ist vorzugsweise der Strahlteiler parallel zur optischen Achse in Translation beweglich.

Die mindestens eine erste Zylinderlinse kann als Sammellinse mit mindestens einer konvexen Oberfläche ausgestaltet sein und/oder strahlaufwärts oder strahlabwärts des Strahlteilers angeordnet sein. Daneben kann die mindestens eine erste Zylinderlinse in Translation parallel zur optischen Achse beweglich sein.

Die mindestens eine zweite Zylinderlinse ist vorzugsweise derart angeordnet, dass die Teilstrahlen zu dem Interferenzbereich gebrochen werden, in dem die Teilstrahlen miteinander interferieren und ist vorzugsweise als Sammellinse mit mindestens einer konvexen Oberfläche ausgebildet. Die Brennweite der mindestens einen zweiten Zylinderlinse ist vorzugsweise kleiner als die Brennweite der mindestens einen ersten Zylinderlinse, so dass ein möglichst großer Interferenzwinkel einstellbar ist. Zur verbesserten Justage der erfindungsgemäßen Vorrichtung ist die mindestens eine zweite Zylinderlinse vorzugsweise parallel zur optischen Achse in Translation beweglich.

Der Abstand zwischen der mindestens einen ersten Zylinderlinse und der mindestens einen zweiten Zylinderlinse beträgt vorzugsweise mindestens oder höchstens, insbesondere im Wesentlichen die Summe beider Brennweiten. Dadurch sind die Teilstrahlen jeweils in Brennpunkte fokussierbar, die sich real vor der zweiten Zylinderlinse oder virtuell hinter dieser befinden. Der Wegunterschied der Teilstrahlen ist insbesondere derart gering, dass eine Interferenz der Teilstrahlen volumenmäßig erfolgt, so dass der Interferenzbereich dreidimensional ist, also insbesondere eine Ausdehnung in Richtung der optischen Achse aufweist. Damit kann insbesondere bei der Verwendung von ultrakurzen Pulslängen eine volumenmäßige Strukturierung der Probe erfolgen. Vorzugsweise liegen die Brennpunkte sämtlicher Teilstrahlen in einer gemeinsamen Brennpunktebene, die normal zur optischen Achse ausgerichtet sein kann. In einer weiteren Ausgestaltung der Erfindung sind die konvexen Oberflächen der ersten und zweiten Zylinderlinsen einander zugewandt und/oder plane Oberflächen der ersten und zweiten Zylinderlinsen einander abgewandt.

Weiter ist erfindungsgemäß mindestens eine dritte Zylinderlinse als Sammellinse vorgesehen, deren Zylinderachse senkrecht zur Zylinderachse der mindestens einen ersten Zylinderlinse und insbesondere senkrecht zur optischen Achse ausgerichtet ist, so dass mit der mindestens einen dritten Zylinderlinse Einfluss auf den Strahlengang in der zweiten Ebene unabhängig von der ersten Ebene genommen werden kann. In einer besonders einfachen Weiterbildung der Erfindung ist die mindestens eine dritte Zylinderlinse strahlaufwärts und/oder strahlabwärts des Strahlteilers angeordnet. Vorzugsweise entspricht der Abstand des Interferenzbereichs von der mindestens einen dritten Zylinderlinse deren Brennweite, so dass der Laserstrahl, einschließlich seiner Teilstrahlen, in der zweiten Ebene auf den Interferenzbereich fokussiert wird. Alternativ ist der Abstand des Interferenzbereichs von der mindestens einen dritten Zylinderlinse größer oder kleiner als deren Brennweite. Durch eine Bewegung der mindestens einen dritten Zylinderlinse in Translation parallel zur optischen Achse ist die Ausdehnung des Interferenzmusters rechtwinklig zur Zylinderachse der mindestens einen dritten Zylinderlinse veränderbar.

In einer vorteilhaften Ausgestaltung der Erfindung ist mindestens eine vierte Zylinderlinse als Zerstreuungslinse vorgesehen, deren Zylinderachse insbesondere parallel zur Zylinderachse der mindestens einen ersten Zylinderlinse angeordnet ist. Die mindestens eine vierte Zylinderlinse kann strahlabwärts des Strahlteilers und/oder der mindestens einen ersten Zylinderlinse angeordnet sein, vorzugsweise jedoch strahlaufwärts sämtlicher Brennpunkte der Teilstrahlen. Die mindestens eine vierte Zylinderlinse kann in Translation insbesondere parallel zur optischen Achse beweglich sein. Daneben kann die mindestens eine vierte Zylinderlinse um deren Zylinderachse in Rotation beweglich sein. In einer besonders vorteilhaften Ausgestaltung der Erfindung ist jedem Teilstrahl genau eine vierte Zylinderlinse zugeordnet, wobei die vierten Zylinderlinsen um jeweils ihre Zylinderachsen in Rotation beweglich sein können. Zur individuellen Justage jedes Teilstrahls sind insbesondere mindestens zwei vierte Zylinderlinsen unabhängig voneinander beweglich, wobei alternativ oder zusätzlich im Sinne einer vereinfachten Justage mindestens zwei vierte Zylinderlinsen synchron zueinander beweglich sein können. Die mindestens eine vierte Zylinderlinse kann derart angeordnet sein, dass mindestens ein Teilstrahl nach der vierten Zylinderlinse kollimiert ist. Vorzugsweise bildet die mindestens eine vierte Zylinderlinse mit der mindestens einen ersten Zylinderlinse und mit der mindestens einen zweiten Zylinderlinse ein Linsensystem aus, das insgesamt parallel zur optischen Achse beweglich sein kann, wobei die Relativpositionen der Komponenten des Linsensystems zueinander entlang der optischen Achse konstant bleiben kann.

In einer weiteren vorteilhaften Ausgestaltung der Erfindung ist mindestens eine fünfte Zylinderlinse als Sammellinse vorgesehen, deren Zylinderachse parallel zur Zylinderachse der mindestens einen ersten Zylinderlinse ausgerichtet ist, und die insbesondere zusammen mit der mindestens einen ersten Zylinderlinse ein Linsensystem ausbildet, so dass optische Fehler der ersten Zylinderlinse durch die fünfte Zylinderlinse korrigierbar sind. Die fünfte Zylinderlinse ist hierzu vorzugsweise unmittelbar benachbart zur mindestens einen ersten Zylinderlinse angeordnet.

Vorzugsweise ist mindestens eine sechste Zylinderlinse als Sammellinse vorgesehen, deren Zylinderachse parallel zur Zylinderachse der mindestens einen ersten Zylinderlinse ausgerichtet ist und die strahlaufwärts der mindestens einen zweiten Zylinderlinse angeordnet sein kann. Eine konvexe Oberfläche der mindestens einen sechsten Zylinderlinse kann der mindestens einen ersten Zylinderlinse zugewandt sein kann. Daneben kann mindestens eine siebte Zylinderlinse als Zerstreuungslinse vorgesehen sein, deren Zylinderachse parallel zur Zylinderachse der mindestens einen ersten Zylinderlinse ausgerichtet ist und die strahlaufwärts der mindestens einen zweiten Zylinderlinse angeordnet sein kann. Die mindestens eine siebte Zylinderlinse bildet vorzugsweise mit der mindestens einen sechsten Zylinderlinse und mit der mindestens einen zweiten Zylinderlinse ein Linsensystem zur Korrektur optischer Fehler aus. Hierzu sind insbesondere die mindestens eine sechste Zylinderlinse und/oder die mindestens eine siebte Zylinderlinse und/oder die mindestens eine zweite Zylinderlinse unabhängig voneinander in Translation parallel zur optischen Achse beweglich.

In einer weiteren Ausgestaltung der Erfindung ist ein erstes Prisma vorgesehen, dessen senkrecht zur Grundfläche angeordnete Prismenachse parallel zur Zylinderachse der mindestens einen ersten Zylinderlinse ausgerichtet ist. Das erste Prisma weist insbesondere eine fokussierende optische Wirkung auf den Laserstrahl, einschließlich seiner Teilstrahlen, auf. Insbesondere weist das erste Prisma eine mehreckige Grundfläche auf, die beispielsweise in Form eines vorzugsweise gleichschenkligen Dreiecks ausgebildet ist. Alternativ kann die Grundfläche des mindestens einen Prismas rund, insbesondere elliptisch sein. Mindestens eine Oberfläche des mindestens einen ersten Prismas kann normal zur optischen Achse ausgerichtet sein. Das mindestens eine erste Prisma ist vorzugsweise parallel zur optischen Ache in Translation beweglich und/oder strahlabwärts der mindestens einen ersten Zylinderlinse angeordnet.

Vorzugsweise ist mindestens ein zweites Prisma vorgesehen, dessen Prismenachse parallel zur Zylinderachse der mindestens einen ersten Zylinderlinse ausgerichtet ist. Beispielweise weist das mindestens eine zweite Prisma eine divergierende optische Wirkung auf den Laserstrahl, einschließlich seiner Teilstrahlen, auf. Daneben kann das mindestens eine zweite Prisma eine Grundfläche aufweisen, die zwei zusammengesetzten rechtwinkligen Dreiecken entspricht. Das zweite Prisma kann in Translation parallel zur optischen Achse beweglich sein. In einer vorteilhaften Ausgestaltung der Erfindung entsprechen die Grundflächen des ersten Prismas und des mindestens einen zweiten Prismas zusammen einem Rechteck. In einer besonders bevorzugten Ausgestaltung ist jedem Teilstrahl genau ein zweites Prisma zugeordnet, wobei insbesondere die Grundflächen der zweiten Prismen jeweils einem rechtwinkligen Dreieck entsprechen. Mindestens zwei zweite Prismen können unabhängig voneinander beweglich sein und/oder mindestens zwei zweite Prismen können synchron zueinander beweglich sein. Das mindestens eine erste Prisma und/oder das mindestens eine zweite Prisma können zwischen der mindestens einen ersten Zylinderlinse und der mindestens einen zweiten Zylinderlinse angeordnet sein.

Vorzugsweise sind der Strahlteiler und/oder mindestens eine Zylinderlinse und/oder mindestens ein Prisma in Translation parallel zur optischen Achse beweglich, um Parameter der Interferenzstruktur zu verändern und/oder optische Fehler zu korrigieren.

Weiter vorzugsweise ist mindestens ein Strahlaufweiter zur Veränderung des Strahlquerschnitts des Laserstrahls, einschließlich seiner Teilstrahlen, und/oder zur Änderung der Strukturperiode vorgesehen. Der Strahlaufweiter kann dazu ausgestaltet sein, beispielsweise den Interferenzwinkel der Teilstrahlen zu ändern, so dass die Strukturperiode des Interferenzmusters veränderbar ist. Beispielsweise ist der mindestens eine Strahlaufweiter gebildet durch drei Zylinderlinsen und/oder durch eine Zylinderlinse mit einem ersten Prisma und mit mindestens einem zweiten Prisma. Aufgrund der Beweglichkeit mindestens einer seiner Komponenten ist der Strahlaufweiter vorzugsweise als veränderlicher Strahlaufweiter ausgestaltet. Funktional entspricht der Strahlaufweiter damit insbesondere einer Vorrichtung optischen Vergrößerung des Laserstrahls, die bei einem Wert der Vergrößerung von größer 1 den Querschnitt des Laserstrahl vergrößert und bei einem Wert der Vergrößerung zwischen 0 und 1 den Querschnitt des Laserstrahls verkleinert.

Das Interferenzmuster weist vorzugsweise linienförmige Strukturelemente auf, deren Erstreckungsrichtungen insbesondere jeweils parallel zur Zylinderachse der ersten Zylinderlinse angeordnet sind. Daneben kann das Interferenzmuster in mindestens einer Richtung eine benutzerdefinierte, insbesondere veränderliche Strukturperiode aufweisen, die dem Abstand zweier benachbarter Strukturelemente entspricht. Das Interferenzmuster ist vorzugsweise rechteckig oder elliptisch, wobei das Interferenzmuster in einer ersten Achse, die parallel zur Zylinderachse der ersten Zylinderlinse ausgerichtet ist, eine andere Ausdehnung aufweisen kann als in einer zweiten Achse, die senkrecht zur Zylinderachse der ersten Zylinderachse angeordnet ist. Die Ausdehnungen des Interferenzmusters sowie dessen Strukturperiode sind insbesondere mittels einer Änderung der optischen Komponenten der erfindungsgemäßen Vorrichtung veränderbar, vorzugsweise durch eine Änderung der Position und/oder der optischen Eigenschaften. Daneben kann die räumliche Position des Interferenzmusters, insbesondere mittels einer Bewegung der mindestens einen vierten Zylinderlinse, veränderbar sein.

Die Ausdehnung des Interferenzmusters in einer bestimmten Richtung ist insbesondere durch eine Änderung von mindestens einer jener Zylinderlinsen veränderbar, deren Zylinderachsen senkrecht zu dieser Richtung angeordnet sind, wobei eine Änderung in diesem Sinne eine Änderung der Brennweite und/oder eine Änderung der Position umfasst. Beispielsweise ist die Ausdehnung des Interferenzmusters in y-Richtung durch eine Veränderung der Brennweite von mindestens einer jener Zylinderlinsen möglich, deren Zylinderachse parallel zur x-Richtung angeordnet ist, und umgekehrt.

Vorzugsweise ist eine Strahlformvorrichtung vorgesehen, die derart ausgestaltet ist, dass das Querschnittsprofil des Laserstrahls benutzerdefiniert veränderlich ist, um Einfluss auf die Form der Interferenzstruktur zu nehmen, wobei das Querschnittsprofil insbesondere mittels Beugungseffekten veränderlich ist. Besonders vorzugsweise ist die Strahlformvorrichtung, insbesondere ausgehend von einer gaußförmigen räumlichen Intensitätsverteilung des Querschnittsprofils, zur Ausbildung eines ellipsenförmigen oder mehreckigen, insbesondere rechteckigen Querschnittsprofils des Laserstrahls ausgebildet, wobei letzteres auch als "Top Hat"- bzw. "Flat Top"-Profil bezeichnet wird. Durch eine Änderung des Querschnittsprofils des Laserstrahls kann die Form des Interferenzmusters veränderbar sein, wobei beispielsweise ein rechteckiges Querschnittsprofil, das beispielsweise mit der bereits beschriebenen Strahlformvorrichtung erhalten werden kann, eine rechteckige Form des Interferenzmusters bewirkt. Die Strahlformvorrichtung kann mit dem Strahlteiler integriert ausgebildet sein.

In einer besonders bevorzugten Ausgestaltung sind eine einzige erste Zylinderlinse und/oder eine einzige zweite Zylinderlinse vorgesehen, um sämtliche Teilstrahlen jeweils mittels einer einzigen Zylinderlinse zu beeinflussen. Daneben ist es möglich, jede Zylinderlinse durch ein Linsensystem zu ersetzen, um optische Fehler zu korrigieren. Der Laserstrahl, einschließlich seiner Teilstrahlen, kann mindestens abschnittsweise zwischen der mindestens einen ersten Zylinderlinse und der mindestens einen zweiten Zylinderlinse parallel zur optischen Achse, insbesondere kollimiert ausgerichtet sein oder eine Divergenz aufweisen. Durch die Divergenz ist die Größe der Teilstrahlquerschnittsflächen im Interferenzbereich und dadurch die Größe des Interferenzmusters beeinflussbar.

Das erfindungsgemäße Verfahren wird vorzugsweise mit einer erfindungsgemäßen optischen Vorrichtung durchgeführt. Weitere Vorteile und Merkmale der Erfindung ergeben sich aus den Ansprüchen und aus der folgenden Beschreibung, in der erfindungsgemäße und nicht-erfindungsgemäße Ausführungsbeispiele unter Bezugnahme auf die Zeichnungen im Einzelnen erläutert sind. Dabei zeigen:
- Fig. 1: ein nicht erfindungsgemäßes Ausführungsbeispiel einer optischen Vorrichtung in der yz-Ebene,
- Fig. 2: das Ausführungsbeispiel der Fig. 1 in der xz-Ebene,
- Fig. 3: durch das Ausführungsbeispiel der Fig. 1 erhaltene Interferenzmuster,
- Fig. 4: ein weiteres nichterfindungsgemäßes Ausführungsbeispiel der Vorrichtung,
- Fig. 5a: ein weiteres Ausführungsbeispiel der nichterfindungs-gemäßen Vorrichtung,
- Fig. 5b: das Ausführungsbeispiel der Fig. 5a mit bewegtem Strahlteiler,
- Fig. 6: das Ausführungsbeispiel der Fig. 5 mit veränderter Brennweite der zweiten Zylinderlinse,
- Fig. 7: ein weiteres Ausführungsbeispiel der erfindungsgemäßen optischen Vorrichtung mit einer dritten Zylinderlinse,
- Fig. 8: durch das Ausführungsbeispiel der Fig. 7 erhaltene Interferenzmuster,
- Fig. 9: das Ausführungsbeispiel der Fig. 7 mit geänderter Position der dritten Zylinderlinse,
- Fig. 10: ein weiteres Ausführungsbeispiel der erfindungsgemäßen Vorrichtung,
- Fig. 11a: ein weiteres Ausführungsbeispiel der erfindungsgemäßen optischen Vorrichtung mit einer vierten Zylinderlinse,
- Fig. 11b: das Ausführungsbeispiel der Fig. 11a mit bewegten Komponenten,
- Fig. 12: ein weiteres Ausführungsbeispiel der erfindungsgemäßen optischen Vorrichtung mit zwei vierten Zylinderlinsen und einer fünften Zylinderlinse,
- Fig. 13: das Ausführungsbeispiel der Fig. 12 mit bewegten vierten Zylinderlinsen,
- Fig. 14a: ein weiteres Ausführungsbeispiel der erfindungsgemäßen optischen Vorrichtung mit einer sechsten und einer siebten Zylinderlinse,
- Fig. 14b: das Ausführungsbeispiel der Fig. 14a mit bewegten Komponenten,
- Fig. 15a: ein weiteres Ausführungsbeispiel der erfindungsgemäßen optischen Vorrichtung mit einer fünften und einer sechsten Zylinderlinse,
- Fig. 15b: das Ausführungsbeispiel der Fig. 15a mit bewegten Komponenten,
- Fig. 16a: ein weiteres Ausführungsbeispiel der erfindungsgemäßen optischen Vorrichtung mit einem ersten Prisma,
- Fig. 16b: das Ausführungsbeispiel der Fig. 16a mit bewegtem ersten Prisma,
- Fig. 17: ein weiteres Ausführungsbeispiel der erfindungsgemäßen optischen Vorrichtung mit einem zweiten Prisma,
- Fig. 18a: ein weiteres Ausführungsbeispiel der erfindungsgemäßen optischen Vorrichtung mit zwei zweiten Prismen,
- Fig. 18b: das Ausführungsbeispiel der Fig. 18a mit bewegten Prismen,
- Fig. 19a: ein weiteres Ausführungsbeispiel der erfindungsgemäßen optischen Vorrichtung mit zwei vierten Zylinderlinsen und Prismen,
- Fig. 19b: das Ausführungsbeispiel der Fig. 19a mit bewegten Prismen und
- Fig. 20: das Ausführungsbeispiel der Fig. 1 mit einem Laser und einer Probe.

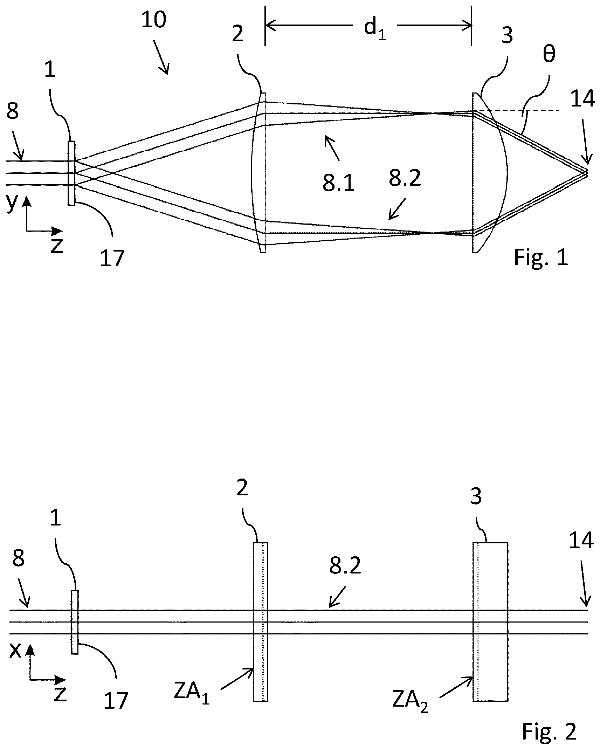

Fig. 1 zeigt eine schematische Darstellung eines Ausführungsbeispiels der optischen Vorrichtung 10 gemäß einem kartesischen Koordinatensystem in der yz-Ebene, wobei die z-Achse der optischen Achse z entspricht und die x-Achse und y-Achse jeweils zur z-Achse senkrecht und senkrecht zueinander angeordnet sind.

Ein in Fig. 1 nicht dargestellter Laser 12 emittiert einen Laserstrahl 8, der kollimiert auf einen Strahlteiler 1 trifft und in zwei Teilstrahlen 8.1, 8.2 aufgeteilt wird, die beide unter einem endlichen, jeweils gleichen Winkel zur optischen Achse z, also zu dieser achsensymmetrisch, ausgelenkt werden und jeweils weiterhin kollimiert sind. Der Strahlteiler 1 ist beispielhaft als diffraktives optisches Element in Form eines Gitters ausgebildet, so dass die Aufteilung des Laserstrahls 8 durch Beugungseffekte bedingt ist. Alternativ kann der Strahlteiler 1 als teilreflektierender Spiegel ausgebildet sein. Die Teilstrahlen 8.1, 8.2 werden insofern lediglich in y-Richtung ausgelenkt; es findet kein Versatz der Teilstrahlen 8.1, 8.2 in x-Richtung statt. Die Teilstrahlen 8.1, 8.2 treffen strahlabwärts des Strahlteilers 1 auf eine erste Zylinderlinse 2, deren Zylinderachse ZA₁ parallel zur x-Achse ausgerichtet ist. Die dem Strahlteiler 1 zugewandte Oberfläche der ersten Zylinderlinse 2 ist in der yz-Ebene der Fig. 1 konvex ausgebildet, während die dem Strahlteiler 1 abgewandte Oberfläche plan ist, so dass die erste Zylinderlinse 2 die Form einer konvexplanen Sammellinse aufweist. Aufgrund der ersten Zylinderlinse 2 werden beide jeweils kollimiert auf diese auftreffenden Teilstrahlen 8.1, 8.2 jeweils zu einem Brennpunkt fokussiert, wobei sich beide Brennpunkte in jeweils gleichem Abstand zur ersten Zylinderlinse 2 befinden. Nach Durchlaufen der jeweiligen Brennpunkte divergieren die Teilstrahlen 8.1, 8.2 und treffen auf eine zweite, hier plankonvexe Zylinderlinse 3, deren dem Strahlteiler 1 zugewandte Oberfläche plan und die dem Strahlteiler 1 abgewandte Oberfläche konvex ausgestaltet sind. Die Zylinderachse ZA₂ der zweiten Zylinderlinse 3 ist parallel zur x-Achse ausgerichtet, so dass die Zylinderachse ZA₁ der ersten Zylinderlinse 2 und die Zylinderachse ZA₂ der zweiten Zylinderlinse 3 parallel zueinander ausgerichtet sind.

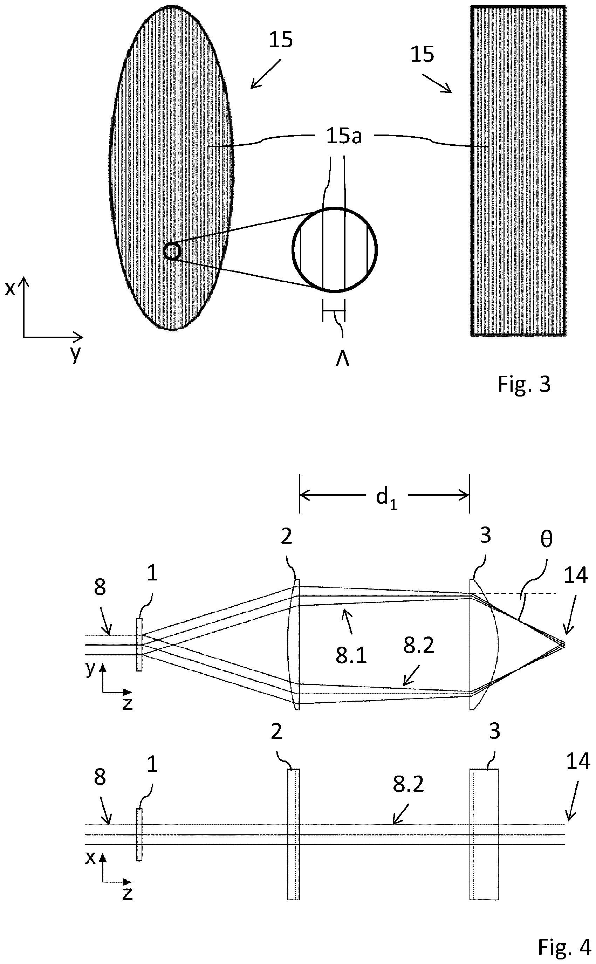

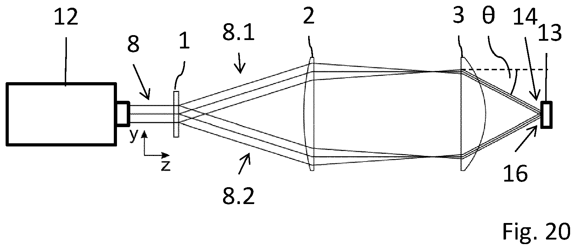

Beide Teilstrahlen 8.1, 8.2 werden durch die zweite Zylinderlinse 3 jeweils kollimiert und unter einem endlichen Interferenzwinkel θ gegenüber der optischen Achse z derart zueinander und in Richtung einer zu bearbeitenden, in Fig. 1 nicht dargestellten Probe 13 gelenkt, dass die Teilstrahlen 8.1, 8.2 in einem Interferenzbereich 14 miteinander interferieren und ein Interferenzmuster 15 ausbilden, wobei die Probe 13 im Interferenzbereich 14 angeordnet ist, s. Fig. 20. Bedingt durch die räumliche Energieverteilung des Interferenzmusters 15 und durch die Wechselwirkung der Laserstrahlung mit dem Probenmaterial erfolgt eine Strukturierung der Probe 13 in einem Strukturbereich 16, wie dies anhand der Interferenzmuster 15 in Fig. 3 gezeigt ist. Die Struktur 9 der Probe 13 wird durch das Interferenzmuster 15 mit linienförmigen Strukturelementen 15a und vordefinierter Strukturperiode A ausgebildet, auf die nachfolgend weiter eingegangen wird.

Aus Fig. 1 geht hervor, dass sich die Teilstrahlen 8.1, 8.2 symmetrisch zur optischen Achse z verhalten. Der Abstand d₁ der ersten Zylinderlinse 2 von der zweiten Zylinderlinse 3 entspricht der Summe der Brennweiten beider Zylinderlinsen 2, 3. Aufgrund der parallel zueinander ausgerichteten Zylinderachsen ZA₁, ZA₂ der ersten und zweiten Zylinderlinsen 2, 3 kann der Laserstrahl 8, einschließlich dessen Teilstrahlen 8.1, 8.2, in der yz-Ebene unabhängig von der xz-Ebene manipuliert werden. Damit ist die Geometrie der erhaltenen Struktur 9 auf der Probe 13 in der y-Achse unabhängig von der x-Achse manipulierbar, was auch durch die folgenden Ausführungsbeispiele gezeigt wird. Der in Fig. 1 dargestellte Interferenzwinkel θ bezieht sich auf die dort dargestellte yz-Ebene, in der die bereits erwähnte Aufteilung der Teilstrahlen 8.1, 8.2 erfolgt. Aufgrund der Fokussierung der Teilstrahlen 8.1, 8.2 zwischen der ersten Zylinderlinse 2 und der zweiten Zylinderlinse 3 wird die Wegdifferenz der Teilstrahlen 8.1, 8.2, also die Differenz der von Teilstrahlen 8.1, 8.2 jeweils zurückgelegten Wegen, möglichst gering gehalten, um einen räumlich möglichst großen Interferenzbereich 14 zu erhalten.

Fig. 2 zeigt die Vorrichtung 10 der Fig. 1 in der xz-Ebene, die senkrecht zur yz-Ebene der Fig. 1 angeordnet ist. Aufgrund der Beschaffenheit des Strahlteilers 1 werden die Teilstrahlen 8.1, 8.2 des Laserstrahls 8 lediglich, wie bereits gesagt, in der yz-Ebene ausgelenkt, so dass sich die Teilstrahlen 8.1, 8.2 in der xz-Ebene überlappen und dort nicht getrennt ersichtlich sind. Da die Zylinderachsen ZA₁, ZA₂ der ersten Zylinderlinse 2 und der zweiten Zylinderlinse 3 beide jeweils parallel zur x-Achse ausgerichtet sind, werden die Teilstrahlen 8.1, 8.2 in der xz-Ebene weder durch die erste Zylinderlinse 2 noch durch die zweite Zylinderlinse 3 gebrochen. Der Laserstrahl 8, insbesondere dessen Teilstrahlen 8.1, 8.2, ist in der xz-Ebene kollimiert auf den Interferenzbereich 14 gerichtet.

Fig. 3 zeigt durch die optische Vorrichtung 10 gemäß den Fig. 1 und 2 erhaltene Interferenzmuster 15 und damit auch Strukturen 9 in einem Strukturbereich 16 der Probe 13 mit linienförmigen Strukturelementen 15a, die in einer vordefinierten, hier festen Strukturperiode A nebeneinander angeordnet sind, wobei die linienförmigen Strukturelemente 15a parallel zur y-Achse ausgerichtet und entlang der x-Achse benachbart zueinander angeordnet sind. Weiter bezeichnet die Strukturperiode A den Abstand zweier einander benachbarter Strukturelemente 15a. Das in Fig. 3 links angeordnete Interferenzmuster 15 ist ellipsenförmig, wobei die Halbachse in x-Richtung größer als die Halbachse in y-Richtung ist. Die Ausbildung der Struktur 9 der Probe 13 erfolgt wie bereits gesagt durch die Interferenz der Teilstrahlen 8.1, 8.2. Je nach Anwendungsfall wird eine dem Strahlteiler 1 zugewandte Probenoberfläche oder ein Probenvolumen innerhalb der Probe 13 bearbeitet. Bedingt durch die Wechselwirkung der Laserstrahlung mit dem Probenmaterial erfolgt die Bearbeitung der Probe 13 aufgrund eines Werkstoffabtrags, beispielsweise aufgrund von Ablationsprozessen, und/oder aufgrund einer Modifizierung des Probenmaterials, etwa durch Polymerisation.

Neben dem ellipsenförmigen Interferenzmuster 15 kann ein in Fig. 3 rechts dargestelltes rechteckförmiges Interferenzmuster 15, und damit eine entsprechend geformte Struktur 9 der Probe 13 erhalten werden, indem beispielsweise eine Strahlformvorrichtung 17 verwendet wird, die integral mit dem Strahlteiler 1 ausgebildet ist und die einen kreisförmigen Querschnitt des eintreffenden Laserstrahles 8 nach einer üblicherweise gaußförmigen Intensitätsverteilung in einen rechteckförmigen Querschnitt umwandelt, was auch als "Top hat"- bzw. "Flat top"-Profil bezeichnet wird. Durch den geänderten, rechteckigen Querschnitt der Laserstrahlung ergibt sich im Interferenzbereich 14 ein rechteckförmiges Interferenzmuster 15, das wie gesagt eine entsprechende Strukturierung der Probe 13 bewirkt. Ein vergrößerter Bereich des Interferenzmusters 15a ist in Fig. 3 mittig angeordnet, aus dem hervorgeht, dass die Strukturperiode Λ dem Abstand zweier benachbarter Strukturelemente 15a entspricht.

Das Ausführungsbeispiel der Fig. 4 entspricht im Wesentlichen dem Ausführungsbeispiel der Fig. 1 und 2, wobei hier die Brennweite der ersten Zylinderlinse 2 derart verändert ist, dass die Brennpunkte der Teilstrahlen 8.1, 8.2 nach Passieren der ersten Zylinderlinse 2 jeweils virtuell hinter der zweiten Zylinderlinse 3 angeordnet sind. Insbesondere bei der Verwendung von fs-Pulsen kann die Wegdifferenz der Teilstralen minimiert werden, was ein räumlich größer ausgedehntes Interferenzmuster bewirkt. Den gleichen Effekt würde auch eine Verringerung des Abstandes d₁ der zweiten Zylinderlinse 3 von der ersten Zylinderlinse 2 bewirken. Die Teilstrahlen 8.1, 8.2 sind nach der zweiten Zylinderlinse 3 jeweils nicht mehr kollimiert, sondern werden auf Brennpunkte fokussiert, die jeweils im gleichen Abstand zwischen der zweiten Zylinderlinse 3 und dem Interferenzbereich 14 angeordnet sind. Nach den Brennpunkten divergieren die Teilstrahlen 8.1, 8.2 jeweils und interferieren wie bereits beschrieben im Interferenzbereich 14.

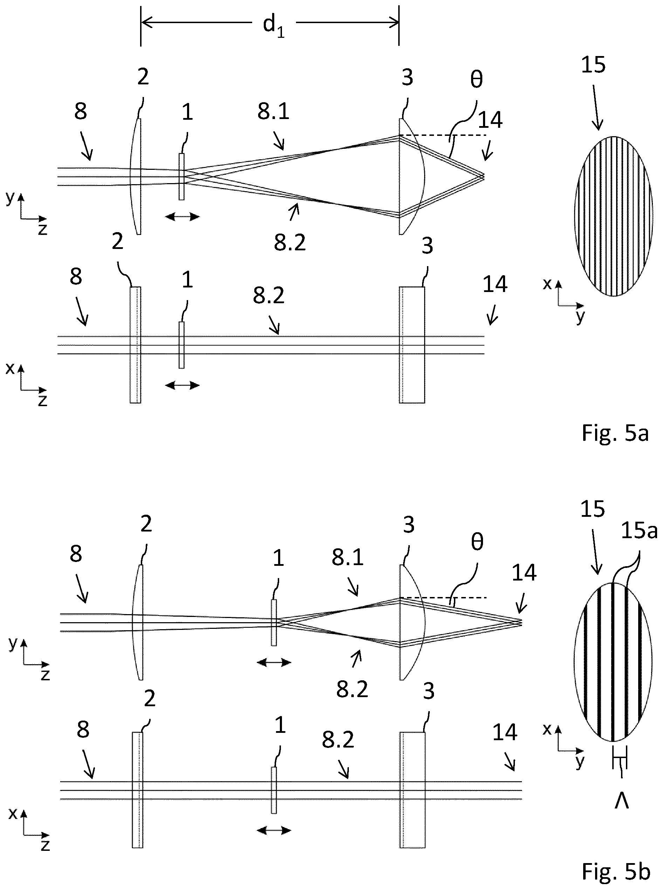

Im Ausführungsbeispiel der Fig. 5a sind im Vergleich zum Ausführungsbeispiel der Fig. 1 der Strahlteiler 1 und die erste Zylinderlinse 2 derart vertauscht, dass der Laserstrahl 8 zuerst auf die erste Zylinderlinse 2 und danach, aufgrund der optischen Wirkung der ersten Zylinderlinse 1 als Sammellinse fokussierend auf den Strahlteiler 1 trifft. Der Abstand d₁ zwischen der ersten Zylinderlinse 2 und der zweiten Zylinderlinse 3 entspricht der Summe der Brennweiten beider Zylinderlinsen 2, 3, so dass die Teilstrahlen 8.1, 8.2 nach dem Strahlteiler 1 jeweils auf einen Brennpunkt vor der zweiten Zylinderlinse 3 fokussiert werden. Nach der zweiten Zylinderlinse 3 werden die Teilstrahlen 8.1, 8.2, ähnlich zu Fig. 1, jeweils kollimiert zum Interferenzbereich 14 hin gebrochen. Der Strahlteiler 1 ist im Ausführungsbeispiel der Fig. 5a in Translation entlang der optischen Achse, also in z-Richtung, beweglich, so dass durch eine Bewegung des Strahlteilers 1 der Ort, an dem die Teilstrahlen 8.1, 8.2 jeweils auf die zweite Zylinderlinse 3 auftreffen, veränderlich ist, was in Fig. 5b gezeigt ist.

Damit ist auch der Interferenzwinkel θ, unter dem die Teilstrahlen 8.1, 8.2 relativ zur optischen Achse z zum Interferenzbereich 14 gebrochen werden, veränderbar, was sich auf die Strukturperiode A der Strukturelemente 15a auswirkt. Im Vergleich zu dem in Fig. 3 gezeigten Interferenzmuster 15 weist das in Fig. 5a rechts dargestellte Interferenzmuster 15 eine größere Strukturperiode Λ auf, da die Strukturelemente 15a weiter entfernt voneinander angeordnet sind. Die Beweglichkeit des Strahlteilers 1 ist durch einen Doppelpfeil dargestellt.

In Fig. 5b wurde der Strahlteiler 1 gegenüber Fig. 5a parallel zur optischen Achse z näher zur zweiten Zylinderlinse 3 bewegt. Dadurch treffen die Teilstrahlen 8.1, 8.2 jeweils in einem radial geringeren Abstand zur optischen Achse z auf die zweiten Zylinderlinse 3 auf. Außerdem werden die Teilstrahlen 8.1, 8.2 durch die zweite Zylinderlinse in einem verglichen mit der Fig. 5a geringeren Interferenzwinkel θ zum Interferenzbereich 14 gebrochen. Dementsprechend befinden sich die Strukturelemente 15a des Interferenzmusters 15 gemäß Fig. 5b in einem gegenüber der Fig. 5a größeren Abstand; die Strukturperiode Λ ist daher in Fig. 5b größer als in Fig. 5a.

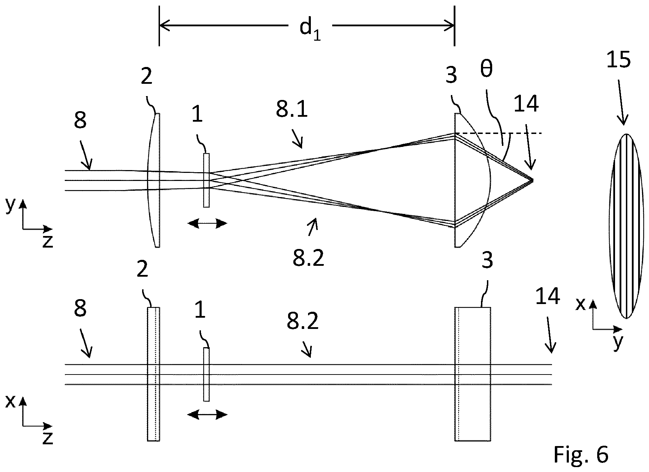

Das Ausführungsbeispiel der Fig. 6 basiert auf dem Ausführungsbeispiel der Fig. 5a, wobei sich nun die zweite Zylinderlinse 3 in einem größeren Abstand d₁ von der ersten Zylinderlinse 2 befindet. Hierzu können die erste Zylinderlinse 2 und/oder die zweite Zylinderlinse 3 in Translation entlang der optischen Achse z beweglich sein. Indem der Abstand d₁ zwischen der ersten Zylinderlinse 2 und der zweiten Zylinderlinse 3 vergrößert ist, werden beide Teilstrahlen 8.1, 8.2 nach der zweiten Zylinderlinse 3 nicht mehr wie im Ausführungsbeispiel der Fig. 5 jeweils kollimiert, sondern nun jeweils fokussiert zum Interferenzbereich 14 gebrochen, ähnlich wie dies bereits im Ausführungsbeispiel der Fig. 4 beschrieben ist. Das dadurch erhaltene, schematisch in Fig. 6 rechts dargestellte Interferenzmuster 15 weist gegenüber dem Interferenzmuster 15 der Fig. 5a in y-Richtung eine geringere Ausdehnung aus, da aufgrund der veränderten Anordnung der Zylinderlinsen 2, 3 eine stärkere Fokussierung der Teilstrahlen 8.1, 8.2 in y-Richtung, nicht aber in x-Richtung erfolgt. Die Strukturperiode Λ des Interferenzmusters 15 der Fig. 6 ist größer als jene von Fig. 5a, aber kleiner als jene von Fig. 5b.

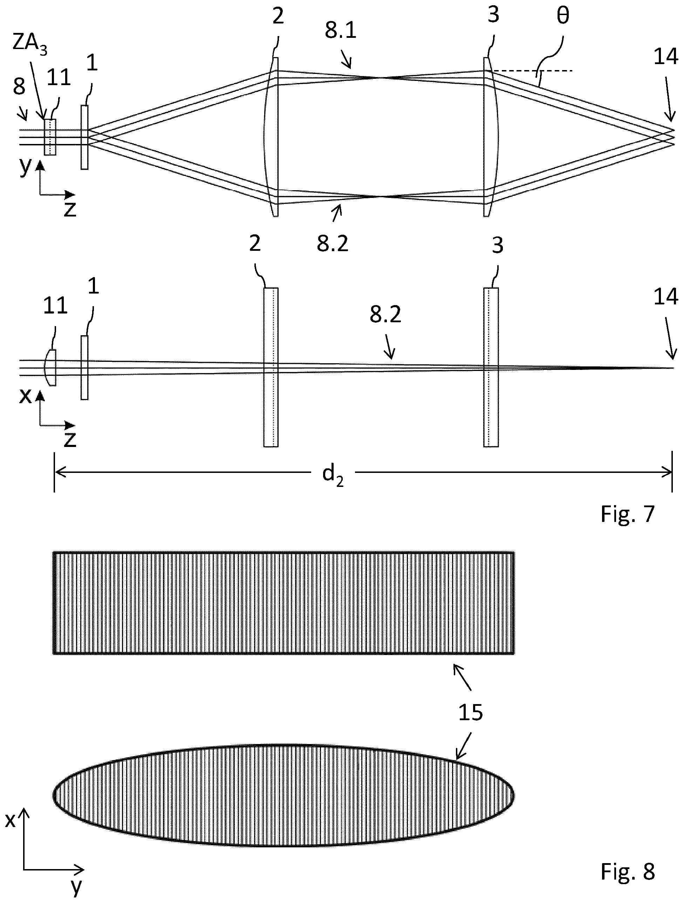

Das Ausführungsbeispiel der Fig. 7 entspricht dem Ausführungsbeispiel der Fig. 1, wobei nun zusätzlich vor dem Strahlteiler 1 eine dritte Zylinderlinse 11 angeordnet ist, deren Zylinderachse ZA₃ parallel zur y-Achse, damit senkrecht zu den Zylinderachsen ZA₁, ZA₂ der ersten und zweiten Zylinderlinsen 2, 3, ausgerichtet ist. Insofern hat die dritte Zylinderlinse 11 in der im oberen Teil der Fig. 7 gezeigten yz-Ebene keinen wesentlichen Einfluss auf den Strahlengang. Demgegenüber bewirkt die dritte Zylinderlinse 11 in der xy-Ebene, die im unteren Teil der Fig. 7 gezeigt ist, eine Fokussierung des Laserstrahls 8, einschließlich der Teilstrahlen 8.1, 8.2, wobei die Brennweite der dritten Zylinderlinse 11 dem Abstand d₂ der dritten Zylinderlinse 11 zum Interferenzbereich 14 entspricht. Aufgrund der Fokussierung des Laserstrahls 8 in der xz-Ebene weisen die mit diesem Ausführungsbeispiel erhaltenen und in Fig. 8 gezeigten Interferenzmuster 15 jeweils in x-Richtung gegenüber dem Interferenzmuster der Fig. 3 eine kleinere Ausdehnung auf, wobei die Ausdehnungen in y-Richtung unverändert sind und wobei die Strukturperiode Λ durch die dritte Zylinderlinse 11 nicht beeinflusst ist.

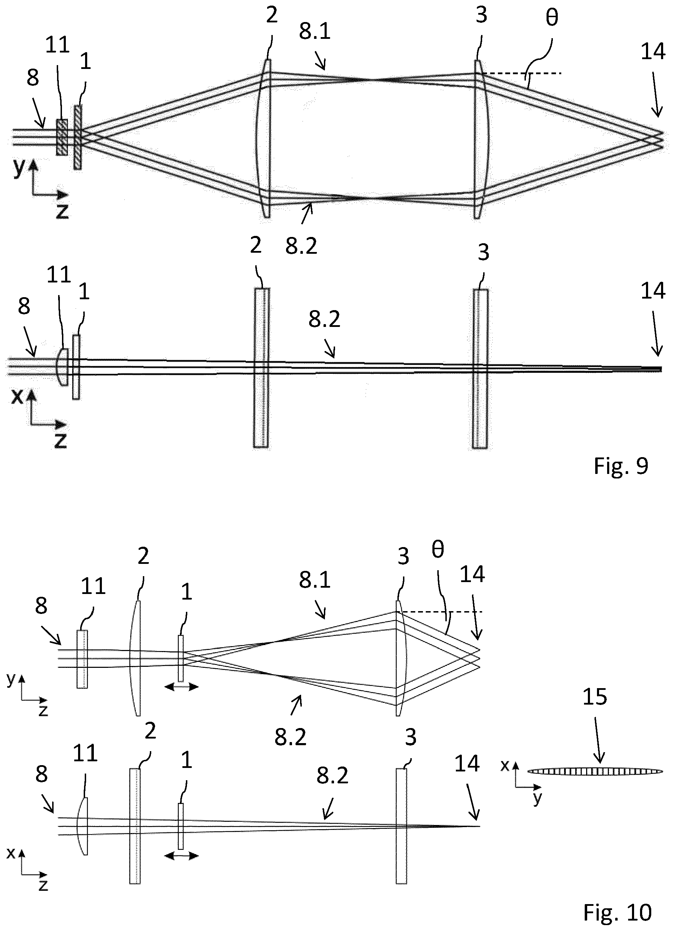

Im Ausführungsbeispiel der Fig. 9 wurde, ausgehend vom Ausführungsbeispiel der Fig. 7, die dritte Zylinderlinse 11 parallel zur optischen Achse z näher zum Strahlteiler 1 bewegt. Dadurch werden die Teilstrahlen 8.1, 8.2 im Interferenzbereich 14 in der xz-Ebene nicht mehr, wie im Ausführungsbeispiel der Fig. 7, fokussiert, sondern weisen eine größere räumliche Ausdehnung auf, was sich in einem in x-Richtung entsprechend vergrößerten Interferenzbereich 14 äußert. Das Verhalten des Strahlengangs in der yz-Ebene wird durch die Bewegung der dritten Zylinderlinse 11 nicht wesentlich beeinflusst; insbesondere der Interferenzwinkel θ entspricht jenem des Ausführungsbeispiels der Fig. 7

Ausgehend vom Ausführungsbeispiel der Fig. 7 können die Positionen des Strahlteilers 1 und der ersten Zylinderlinse 2 vertauscht sein, was im Ausführungsbeispiel der Fig. 10 dargestellt ist. Dort trifft der Laserstrahl 8 nach wie vor zuerst auf die dritte Zylinderlinse 11, danach jedoch auf die erste Zylinderlinse 2 und anschließend auf den Strahlteiler 1, der entlang der optischen Achse z beweglich ist, um die Strukturperiode A der Strukturelemente zu verändern, wie dies bereits vorstehend beschrieben ist. Im Vergleich mit dem Interferenzmuster 15 der Fig. 8 weist das Interferenzmuster 15 der Fig. 10 eine etwas größere Strukturperiode A auf.

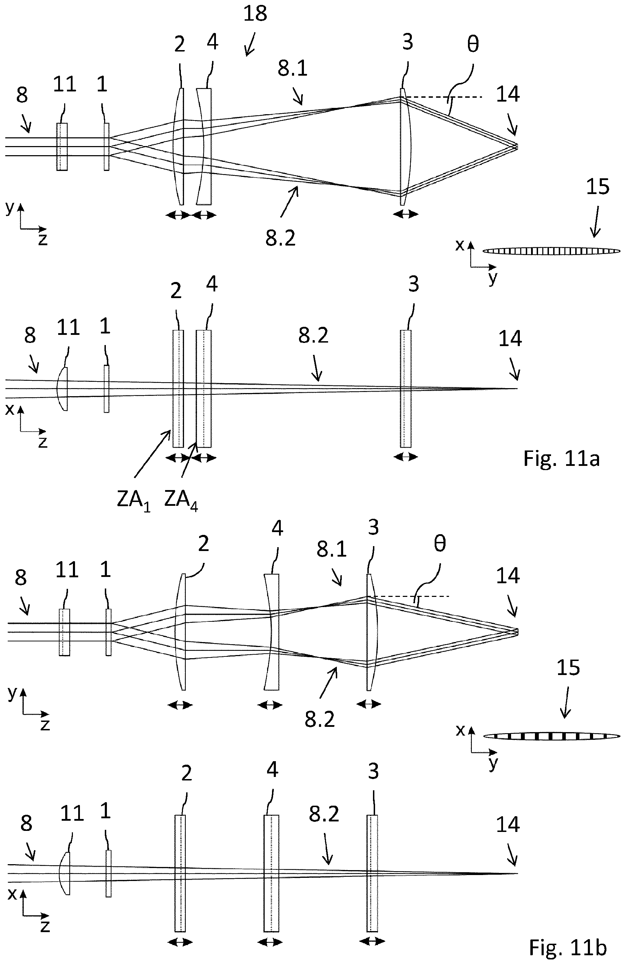

Ausgehend vom Ausführungsbeispiel der Fig. 7 ist im Ausführungsbeispiel der Fig. 11a zusätzlich eine vierte Zylinderlinse 4 zwischen der ersten Zylinderlinse 2 und der zweiten Zylinderlinse 3 angeordnet. Die Zylinderachse ZA₄ der vierten Zylinderlinse 4 ist parallel zur x-Achse und damit parallel zur Zylinderachse ZA₁ der ersten Zylinderlinse 2 ausgerichtet. In der im oberen Teil der Fig. 11a gezeigten yz-Ebene weist die vierte Zylinderlinse 4 eine dem Strahlteiler 1 zugewandte, konkave Oberfläche auf, während die dem Strahlteiler 1 abgewandte Oberfläche plan ausgestaltet ist. Die vierte Zylinderlinse 4 ist daher als konkavplane Zerstreuungslinse ausgestaltet. Nach der vierten Zylinderlinse 4 werden beide Teilstrahlen 8.1, 8.2 jeweils von der optischen Achse z weg gebrochen, wobei beide Teilstrahlen 8.1, 8.2 danach jeweils auf die zweite Zylinderlinse 3 treffen, um in Richtung des Interferenzbereichs 14 gebrochen zu werden. Die Kombination aus der ersten Zylinderlinse 2, der vierten Zylinderlinse 4 und der zweiten Zylinderlinse 3 entspricht funktional einem Strahlaufweiter 18, wobei die erste Zylinderlinse 2, die vierte Zylinderlinse 4 und die zweite Zylinderlinse 3 jeweils in Translation und unabhängig voneinander entlang der optischen Achse z beweglich sind, um neben den optischen Eigenschaften der Teilstrahlen 8.1, 8.2 insbesondere den Interferenzwinkel θ und damit auch die Strukturperiode A des in Fig. 11a rechts gezeigten Interferenzmusters 15 zu beeinflussen. In der in Fig. 11a im unteren Teil gezeigten xz-Ebene entspricht der Strahlengang des Ausführungsbeispiels im Wesentlichen jenem der Fig. 7, da sich die vierte Zylinderlinse 4 aufgrund ihrer in der xz-Ebene biplanen Ausgestaltung den Strahlengang optisch nicht wesentlich beeinflusst.

In Fig. 11b wurden, ausgehend von Fig. 11a, die Positionen der Komponenten des Strahlteilers 18 verändert: Die erste Zylinderlinse 2 wurde in Richtung des Strahlteilers 1, die vierte Zylinderlinse 4 und die zweite Zylinderlinse 2 vom Strahlteiler 1 weg bewegt, wobei die Bewegungen jeweils synchron zueinander erfolgten. Dadurch ist der Interferenzwinkel θ in Fig. 11b gegenüber jenem der Fig. 11a verringert, was sich in einer größeren Strukturperiode Λ des in Fig. 11b rechts gezeigten Interferenzmusters 15 äußert.

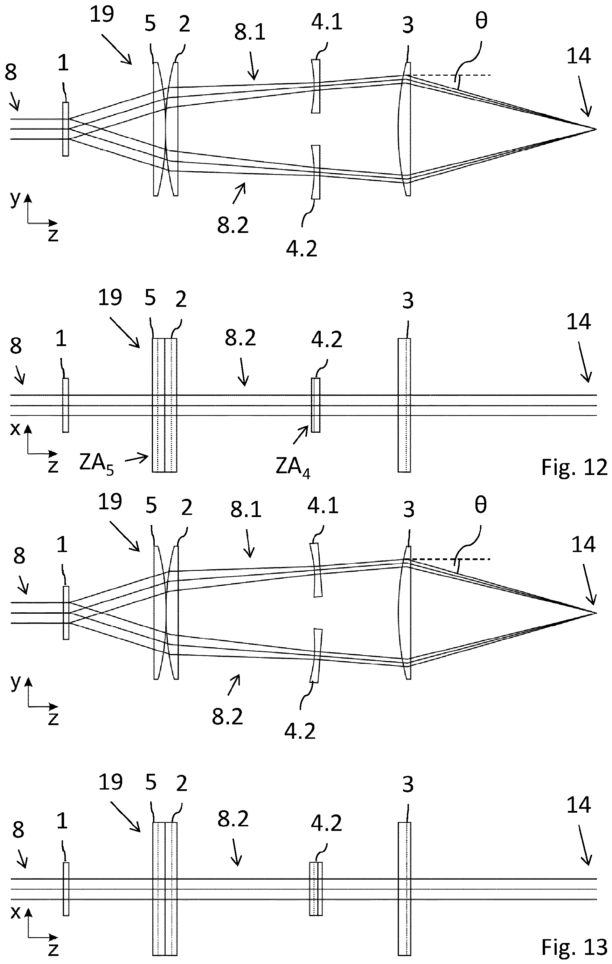

Im Ausführungsbeispiel der Fig. 12 ist, ausgehend vom Ausführungsbeispiel der Fig. 1, unmittelbar benachbart zur und strahlaufwärts der ersten Zylinderlinse 2 eine fünfte Zylinderlinse 5 als Sammellinse angeordnet, deren konvexe Oberfläche zur ersten Zylinderlinse 2 weist und deren Zylinderachse ZA₅ parallel zur Zylinderachse ZA₁ der ersten Zylinderlinse 2 ausgerichtet ist. Die fünfte Zylinderlinse 5 bildet zusammen mit der ersten Zylinderlinse 2 ein Linsensystem 19 aus, wobei die fünfte Zylinderlinse 5 insbesondere optische Fehler der ersten Zylinderlinse 2 korrigiert. Im Vergleich zum Ausführungsbeispiel der Fig. 1 sind zusätzlich zwischen der ersten Zylinderlinse 2 und der zweiten Zylinderlinse 3 zwei vierte Zylinderlinsen 4.1, 4.2 jeweils als Zerstreuungslinsen im Strahlengang vorgesehen, deren Zylinderachsen ZA₄ jeweils parallel zur x-Achse, und damit parallel zur Zylinderachse ZA₁ der ersten Zylinderlinse 2 ausgerichtet sind. Die beiden vierten Zylinderlinsen 4.1, 4.2 sind jeweils in der yz-Ebene konkavplan ausgestaltet, in y-Richtung versetzt zueinander angeordnet und befinden sich jeweils in dem gleichen Abstand zur ersten Zylinderlinse 2 und zur zweiten Zylinderlinse 3. Durch die Verwendung der zwei vierten Zylinderlinsen 4.1, 4.2 können die Teilstrahlen 8.1, 8.2 unabhängig voneinander justiert werden, bevor die zweite Zylinderlinse 3 in der bereits beschriebenen Weise die beiden Teilstrahlen 8.1, 8.2 zum Interferenzbereich 14 bricht. Im Ausführungsbeispiel der Fig. 12 sind die erste vierte Zylinderlinse 4.1 dem ersten Teilstrahl 8.1 und die zweite vierte Zylinderlinse 4.2 dem zweiten Teilstrahl 8.2 zugeordnet. In der im unteren Teil der Fig. 12 gezeigten xz-Ebene sind die beiden vierten Zylinderlinsen 4.1, 4.2 übereinander angeordnet und beeinflussen den Laserstrahl 8 aufgrund ihrer insofern biplanen Oberflächen nicht wesentlich.

Zur unabhängigen Justage der beiden Teilstrahlen 8.1, 8.2 voneinander können die beiden vierten Zylinderlinsen 4.1, 4.2 jeweils parallel zur x-Achse um ihre Zylinderachsen ZA₄ insbesondere synchron rotiert werden. Fig. 13 zeigt das Ausführungsbeispiel der Fig. 12 mit insofern rotierten vierten Zylinderlinsen 4.1, 4.2. Daneben sind die beiden vierten Zylinderlinsen 4.1, 4.2 jeweils unabhängig voneinander in x-, y- und/oder z-Richtung in Translation beweglich. Aufgrund der Bewegungen der vierten Zylinderlinsen 4.1, 4.2 können die Positionen der durch die zweite Zylinderlinse 3 auf die Probe 13 fokussierten Teilstrahlen 8.1, 8.2 unabhängig voneinander justiert werden. Dadurch können Fehljustierungen ausgeglichen und die Position des Interferenzmusters 15 insbesondere auf der Probe 13 sowie dessen Ausdehnung in x- und y-Richtung beeinflusst werden. Insbesondere kann mit dem Ausführungsbeispiel der Fig. 12 und Fig. 13 eine besonders geringe Ausdehnung des Interferenzmusters 15 in y-Richtung und eine besonders kleine Strukturperiode A erhalten werden. Dabei ist wesentlich, dass die Teilstrahlen 8.1, 8.2 nach der zweiten Zylinderlinse 3 jeweils in einem möglichst großen Interferenzwinkel θ zum Interferenzbereich 14 gebrochen werden. Zu diesem Zweck ist im Ausführungsbeispiel der Fig. 12 und 13 der Strahlteiler 1 entlang der optischen Achse z in Translation beweglich.

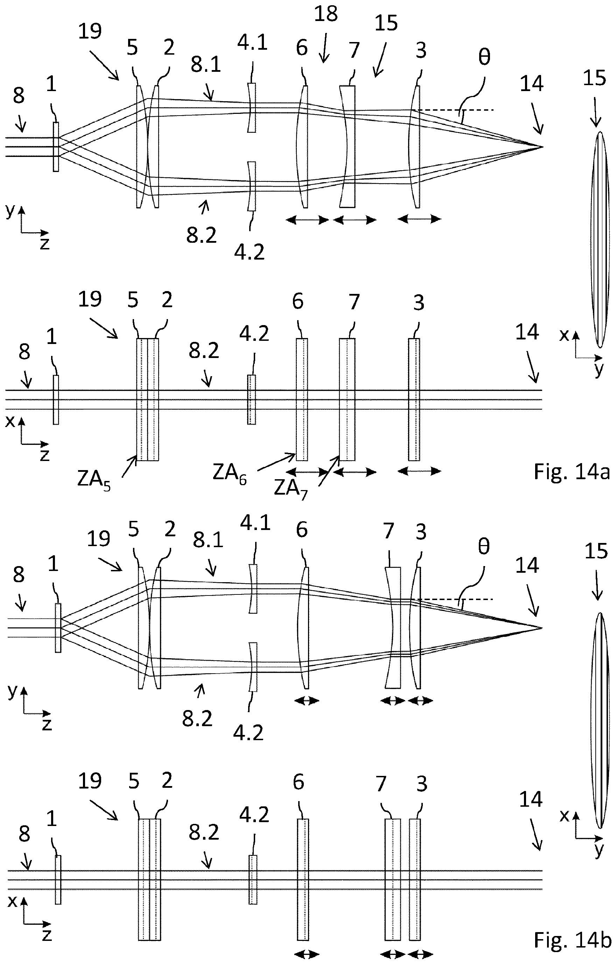

Im Ausführungsbeispiel der Fig. 14a sind, verglichen mit dem Ausführungsbeispiel der Fig. 12, im Strahlengang zwischen den beiden vierten Zylinderlinsen 4.1, 4.2 und der zweiten Zylinderlinse 3 eine sechste Zylinderlinse 6 als Sammellinse und eine siebte Zylinderlinse 7 als Zerstreuungslinse angeordnet, deren beide Zylinderachsen ZA₆, ZA₇ jeweils parallel zur x-Achse ausgerichtet sind. Die sechste Zylinderlinse 6 ist in der yz-Ebene konvexplan und die siebte Zylinderlinse 7 konkavplan ausgestaltet, wobei beide planen Oberflächen jeweils der zweiten Zylinderlinse 3 zugewandt sind. Nach Durchlaufen der beiden vierten Zylinderlinsen 4.1, 4.2 treffen die beiden Teilstrahlen 8.1, 8.2, jeweils kollimiert und parallel zur optischen Achse z ausgerichtet, auf die sechste Zylinderlinse 6, durch die die Teilstrahlen 8.1, 8.2 in Richtung optischen Achse z fokussiert werden, wobei die Brennpunkte jeweils virtuell hinter der siebten Zylinderlinse 7 angeordnet sind. Die Teilstrahlen 8.1, 8.2 werden jeweils aufgrund der konkavplanen Ausgestaltung der siebten Zylinderlinse 7 divergent zur dritten Zylinderlinse 3 gebrochen, durch die die Teilstrahlen 8.1, 8.2 in der bereits beschriebenen Weise unter dem Interferenzwinkel θ auf den Interferenzbereich 14 fokussiert werden. Die sechste Zylinderlinse 6, die siebte Zylinderlinse 7 und die dritte Zylinderlinse 3 sind jeweils in Translation entlang der optischen Achse z verschiebbar und entsprechen funktional einem variablen Strahlaufweiter 18, wobei durch die Bewegungen der Zylinderlinsen 6, 7, 3 entlang der optischen Achse z die Strukturperiode A des Interferenzmusters 15 verändert werden kann, wobei die Beweglichkeit der Komponenten jeweils durch Doppelpfeile gekennzeichnet ist. Im Ausführungsbeispiel der Fig. 14a bewirkt der Strahlteiler 1 eine Aufteilung des Laserstrahls 8 lediglich in der y-Richtung. Da sämtliche Zylinderachsen ZA₁ bis ZA₇ der Zylinderlinsen 2, 3, 4.1, 4.2, 5, 6, 7 parallel zur x-Achse ausgerichtet sind, wird der Strahlengang in der in Fig. 14 im unteren Bereich gezeigten xz-Ebene nicht wesentlich beeinflusst, während eine verhältnismäßig starke Fokussierung in der yz-Ebene erfolgt. Entsprechend ist das in Fig. 14 rechts gezeigte Interferenzmuster 15 in der y-Achse sehr schmal, während in der x-Richtung keine wesentliche Beeinflussung erfolgt.

In Fig. 14b wurden die Positionen der sechsten Zylinderlinse 6, der siebten Zylinderlinse 7 und der zweiten Zylinderlinse 3 derart verändert, dass die Teilstrahlen 8.1, 8.2 gegenüber der Fig. 14a unter einem kleineren Interferenzwinkel θ zum Interferenzbereich gebrochen werden, was sich in einer gegenüber der Fig. 14a vergrößerten Strukturperiode Λ des Interferenzmusters 15 äußert, wobei dessen Position und Form nicht wesentlich verändert wurden.

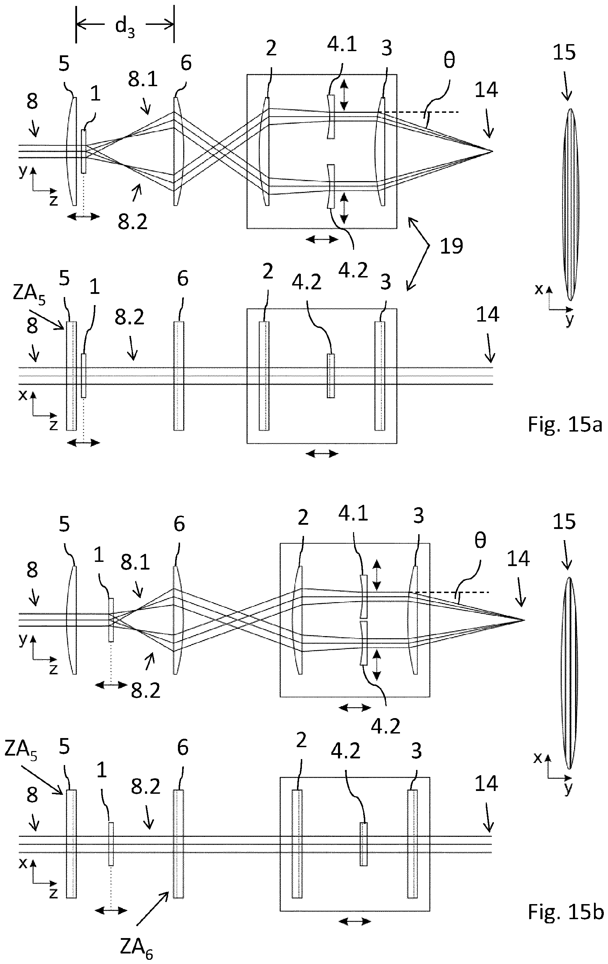

Fig. 15a zeigt ein Ausführungsbeispiel mit einer in Richtung des Strahlgangs vor dem Strahlteiler 1 angeordneten fünften Zylinderlinse 5 als Sammellinse, die in der im oberen Bereich der Fig. 15a gezeigten yz-Ebene konvexplan ausgestaltet ist. Die Zylinderachse ZA₅ der fünften Zylinderlinse 5 ist parallel zur x-Achse und damit parallel zur Zylinderachse ZA₁ der ersten Zylinderlinse 2 ausgerichtet. Aufgrund der fünften Zylinderlinse 5 wird in der yz-Ebene der kollimiert auf diese auftreffende Laserstrahl 8 fokussiert auf den Strahlteiler 1 gelenkt, wodurch der Laserstrahl 8 in bereits beschriebener Weise in zwei Teilstrahlen 8.1, 8.2 aufgeteilt wird. Aufgrund der Fokussierung durch die fünfte Zylinderlinse 5 werden beide Teilstrahlen 8.1, 8.2 jeweils zu Brennpunkten fokussiert, die zur optischen Achse z symmetrisch angeordnet sind. Nach Durchlaufen der Brennpunkte treffen die beiden Teilstrahlen 8.1, 8.2 jeweils auf die sechste Zylinderlinse 6 als Sammellinse, deren Zylinderachse ZA₆ parallel zur Zylinderachse ZA₁ der ersten Zylinderlinse 2 ausgerichtet ist und die in der yz-Ebene plankonvex ausgestaltet ist. Der Abstand d₃ der fünften Zylinderlinse 5 zur sechsten Zylinderlinse 6 entspricht der Summe beider Brennweiten, so dass die Teilstrahlen 8.1, 8.2 nach Passieren der sechsten Zylinderlinse 6 jeweils kollimiert sind. Aufgrund des schrägen Auftreffens der Teilstrahlen 8.1, 8.2 auf die Oberfläche der sechsten Zylinderlinse 6 werden diese nach Passieren der sechsten Zylinderlinse 6 in einem endlichen Winkel gegenüber der optischen Achse z zueinander gebrochen, so dass sich die Teilstrahlen 8.1, 8.2 - jeweils kollimiert - kreuzen und anschließend auf die erste Zylinderlinse 2 treffen.

Durch das Überkreuzen der beiden Teilstrahlen 8.1, 8.2 sind in Fig. 15a nach der sechsten Zylinderlinse 6 der erste Teilstrahl 8.1 unten und der zweite Teilstrahl 8.2 oben angeordnet. Nach Passieren der ersten Zylinderlinse 2 werden die Schwerpunkte beider Teilstrahlen 8.1, 8.2 jeweils parallel zur optischen Achse z ausgerichtet. Ähnlich zum Ausführungsbeispiel der Fig. 12 sind nach der ersten Zylinderlinse 2 zwei vierte Zylinderlinsen 4.1, 4.2 im Strahlengang vorgesehen, wobei die erste vierte Zylinderlinse 4.1 hier dem oberen, zweiten Teilstrahl 8.2 und die zweite vierte Zylinderlinse 4.2 dem unteren, ersten Teilstrahl 8.1 zugeordnet sind. Nach Passieren der beiden vierten Zylinderlinsen 4.1, 4.2 sind beide Teilstrahlen 8.1, 8.2 jeweils kollimiert und parallel zur optischen Achse z ausgerichtet und treffen auf die zweite Zylinderlinse 3 auf, durch die beide Teilstrahlen 8.1, 8.2 in bekannter Weise zum Interferenzbereich 14 gebrochen werden.

In Fig. 15a bilden die erste Zylinderlinse 2, die beiden vierten Zylinderlinsen 4.1, 4.2 und die zweite Zylinderlinse 3 zusammen einen Linsensystem 19, das entlang der optischen Achse z verschiebbar ist, wobei sich die Relativpositionen der Komponenten des Linsensystems 19 entlang der optischen Achse z nicht verändern, so dass die Komponenten des Linsensystems 19 synchron beweglich sind. Daneben ist der Strahlteiler 1 entlang der optischen Achse z in Translation beweglich, um zusammen mit einer Bewegung des Linsensystems 19 insbesondere die Strukturperiode A zu beeinflussen. Der Strahlteiler 1 ist in Fig. 15b gegenüber der Fig. 15a näher zur sechsten Zylinderlinse 6 angeordnet. Daneben sind die beiden vierten Zylinderlinsen 4.1, 4.2 insbesondere entlang der y-Achse in Translation beweglich, um die Positionen der Teilstrahlen 8.1, 8.2 im Interferenzbereich 14 zu korrigieren und Justagefehler auszugleichen, insbesondere derart, dass die Teilstrahlen 8.1, 8.2 nach den vierten Zylinderlinsen 4.1, 4.2 jeweils stets kollimiert sein sollten. In Fig. 15b wurden die beiden vierten Zylinderlinsen 4.1, 4.2 jeweils entlang der y-Achse zur optischen Achse z, also aufeinander zu bewegt. Die Beweglichkeit der Komponenten in Translation ist jeweils durch einen Doppelpfeil gekennzeichnet. Durch die vorstehend beschriebene Bewegung der Komponenten ist der Interferenzwinkel θ der Fig. 15b gegenüber der Fig. 15a kleiner, was sich in einer entsprechend vergrößerten Strukturperiode Λ des Interferenzmusters 15 äußert. Da im Ausführungsbeispiel der Fig. 15a sämtliche Zylinderachsen ZA₁ bis ZA₆ der Zylinderlinsen 2, 3, 4.1, 4.2, 5, 6 parallel zueinander ausgerichtet sind, wird der Laserstrahl 8, einschließlich seiner Teilstrahlen 8.1, 8.2, in der in Fig. 15a unten dargestellten xz-Ebene optisch nicht wesentlich beeinflusst, was auch bei der in Fig. 15b ersichtlichen Bewegung der Komponenten gilt.

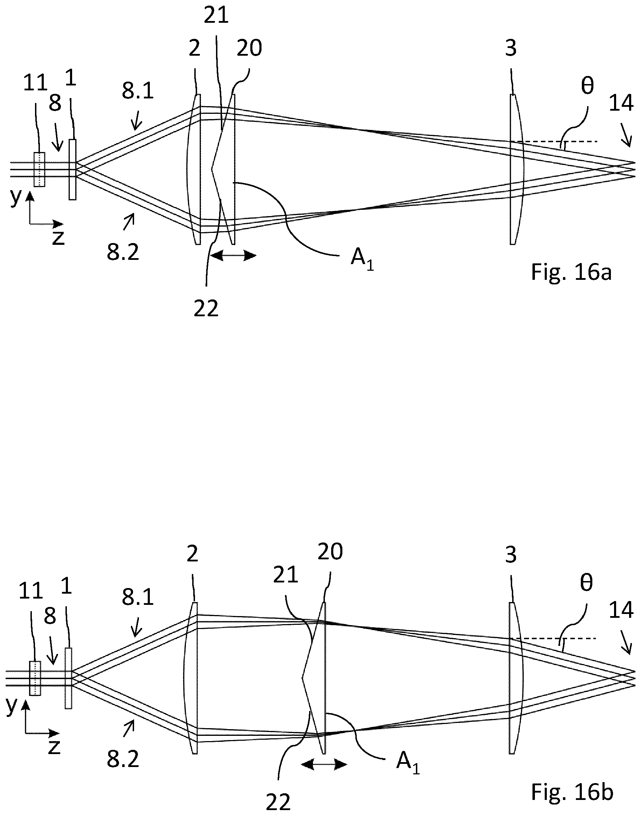

Das Ausführungsbeispiel der Fig. 16a ist eine Weiterentwicklung des in Fig. 7 gezeigten Ausführungsbeispiels, wobei zusätzlich ein erstes Prisma 20 zwischen der ersten Zylinderlinse 2 und der zweiten Zylinderlinse 3 angeordnet ist. Das erste Prisma 20 weist ein gleichschenkliges Dreieck als Grundfläche A₁ auf, wobei beide Schenkel 21, 22 dem Strahlteiler 1 zugewandt sind. Die normal zur Grundfläche A₁ angeordnete Prismenachse PA₁ des ersten Prismas 20 ist parallel zur x-Achse ausgerichtet. Das erste Prisma 20 ist näher zur ersten Zylinderlinse 2 als zur zweiten Zylinderlinse 3 angeordnet, so dass sich die Brennpunkte der Teilstrahlen 8.1, 8.2 jeweils zwischen dem ersten Prisma 20 und der zweiten Zylinderlinse 3 befinden. Das erste Prisma 20 bewirkt aufgrund seiner gegenüber den Teilstrahlen 8.1, 8.2 geneigten Oberflächen seiner Schenkel 21, 22 eine - in der yz-Ebene - Fokussierung derselben, so dass, wie bereits beschrieben, die Wegdifferenz der Teilstrahlen 8.1, 8.2 möglichst gering gehalten wird. Darüber hinaus ist das erste Prisma 20 in Translation entlang der optischen Achse z beweglich, so dass die Strukturperiode A der Interferenzmusters 15 veränderbar ist. In Fig. 16b wurde das erste Prisma 20 gegenüber der Fig. 16a in Richtung der zweiten Zylinderlinse 3 bewegt, was eine Verringerung des Interferenzwinkels θ und damit eine Vergrößerung der Strukturperiode A des Interferenzmusters 15 bewirkt. Außerdem kann das erste Prisma 20 um 180° um die x-Achse rotiert werden, so dass die Schenkel 21, 22 des ersten Prismas 20 der zweiten Zylinderlinse 3 zugewandt sind. Aufgrund der Anordnung beeinflusst das erste Prisma 20 den Strahlgang in der xz-Ebene nicht wesentlich, der im Wesentlichen dem in Fig. 7 gezeigten Strahlengang entspricht.

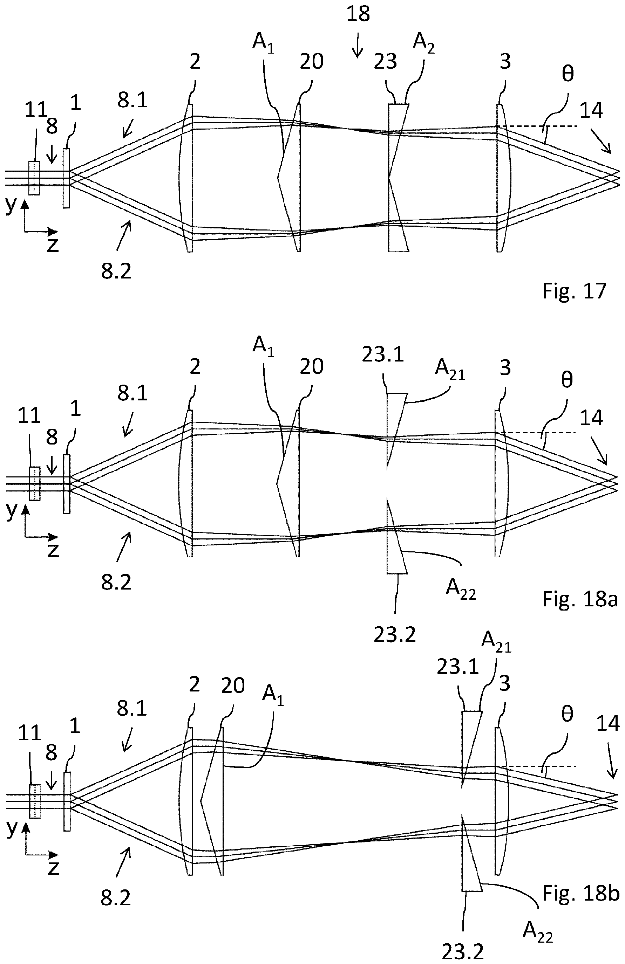

Ausgehend vom Ausführungsbeispiel der Fig. 16a und 16b wird in dem in Fig. 17 gezeigten Ausführungsbeispiel ein zweites Prisma 23 im Strahlengang zwischen dem ersten Prisma 20 und der zweiten Zylinderlinse 3, insbesondere nach den Brennpunkten der Teilstrahlen 8.1, 8.2, angeordnet. Die Grundfläche A₂ des zweiten Prismas 23 entspricht zwei zusammengefügten, jeweils rechtwinkligen Dreiecken, deren parallel zueinander angeordnete und miteinander verbundene Katheten jeweils parallel zur y-Achse angeordnet sind. Die Prismenachse PA₂ des zweiten Prismas 23 ist parallel zur x-Achse angeordnet. Das zweite Prisma 23 bewirkt aufgrund seiner Anordnung und Ausgestaltung eine Divergenz der dieses durchlaufenden Teilstrahlen 8.1, 8.2. Das erste Prisma 20 und das zweite Prisma 23 sind jeweils entlang der optischen Achse z in Translation beweglich und stellen, zusammen mit der dritten Zylinderlinse 3, in diesem Ausführungsbeispiel einen veränderlichen Strahlaufweiter 18 dar, durch den die Strukturperiode A des Interferenzmusters 15 veränderbar ist, insbesondere durch eine Änderung des Interferenzwinkels θ. Wird lediglich das zweite Prisma 23 in Translation parallel zur optischen Achse z bewegt, wird der Interferenzwinkel θ, und damit die Strukturperiode A geändert, nicht jedoch die räumliche Position des Interferenzbereichs 14.

Das zweite Prisma 23 kann durch zwei - separate - zweite Prismen 23.1, 23.1 ersetzt werden, die jeweils parallel zur optischen Achse z in Translation beweglich sind, was im Ausführungsbeispiel der Fig. 18a gezeigt ist. Die zwei zweiten Prismen 23.1, 23.2 sind zur optischen Achse z symmetrisch ausgebildet und angeordnet. Beide zweiten Prismen 23.1, 23.2 weisen jeweils ein rechtwinkliges Dreieck als Grundfläche A₂₁, A₂₂ auf, wobei die Prismenachsen PA₂₁, PA₂₂ beider Prismen 23.1, 23.2 jeweils parallel zur x-Achse angeordnet sind. Alternativ können statt den beiden zweiten Prismen 23.1, 23.2 auch zwei Keilplatten in entsprechender Ausgestaltung vorgesehen sein. Das erste zweite Prisma 23.1 ist dem ersten Teilstrahl 8.1 und das zweite zweite Prisma 23.2 dem zweiten Teilstrahl 8.2 zugeordnet. In Fig. 18b wurden, ausgehend von Fig. 18a, das erste Prisma 20 entlang der optischen Achse z auf die erste Zylinderlinse 2 und die beiden zweiten Prismen 23.1, 23.2 auf die zweite Zylinderlinse 3 zu bewegt, so dass der Interferenzwinkel θ in Fig. 18b gegenüber jenem der Fig. 18a verringert ist.

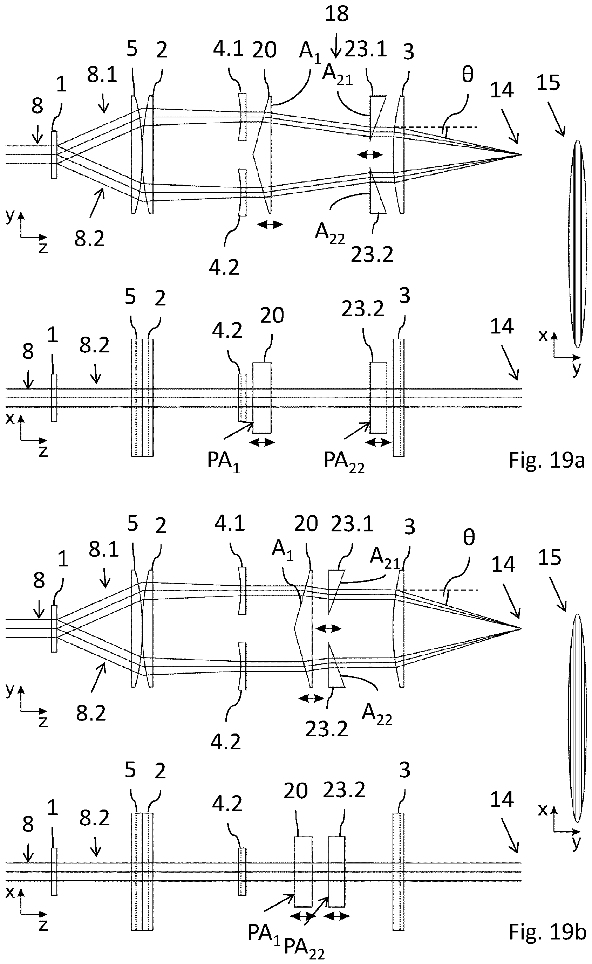

Im Ausführungsbeispiel der Fig. 19a wurden, ausgehend vom Ausführungsbeispiel der Fig. 14b, die sechste Zylinderlinse 6 durch das erste Prisma 20 und die siebte Zylinderlinse 7 durch die zwei zweiten Prismen 23.1, 23.2 ersetzt, wobei das erste Prisma 20 und die zwei zweiten Prismen 23.1, 23.2 nach wie vor entlang der optischen Achse z in Translation beweglich sind und zusammen mit der dritten Zylinderlinse 3, wie bereits beschrieben, einen veränderlichen Strahlaufweiter 18 ausbilden. Das erste Prisma 20 weist aufgrund seiner Geometrie die gleiche optische Wirkung auf wie die sechste Zylinderlinse 6; Entsprechendes gilt für die zwei zweiten Prismen 23.1, 23.2 in Bezug auf die siebte Zylinderlinse 7. Somit entspricht der Strahlengang der Fig. 19a jenem der Fig. 14b, wodurch die jeweils erhaltenen Interferenzmuster 15 identisch sind.

In Fig. 19b wurden, ausgehend von Fig. 19a, das erste Prisma 20 und die beiden zweiten Prismen 23.1, 23.2 entlang der optischen Achse z aufeinander zu bewegt, was zu einer Vergrößerung des Interferenzwinkels θ und damit auch zu einer Verringerung der Strukturperiode des Interferenzmusters 15 führt.

Fig. 20 zeigt das Ausführungsbeispiel der Fig. 1 mit einem Laser 12 als Strahlquelle, der als diodengepumpter Festkörperlaser die in Fig. 1 gezeigte kollimierte, gepulste Laserstrahlung mit einer zeitlichen Pulsdauer im fs-Bereich emittiert. Auf der rechten Seite der Fig. 20 ist im bereits beschriebenen Interferenzbereich 14 der Teilstrahlen 8.1, 8.2 eine Probe 13 derart angeordnet, dass deren Oberfläche mit einer Strukturierung 9 gemäß der in Fig. 3 gezeigten Interferenzstruktur 15 versehen ist.

## Patentansprüche

1. Optische Vorrichtung (10) zur Interferenzstruktierung einer Probe (13) mit einem Laser (12) zur Emission eines Laserstrahls (8), einem Strahlteiler (1) zur Aufteilung des Laserstrahls (8) in mindestens zwei Teilstrahlen (8.1, 8.2), mindestens einer ersten Zylinderlinse (2), mindestens einer zweiten Zylinderlinse (3) zur Brechung der mindestens zwei Teilstrahlen (8.1, 8.2) in Richtung eines Interferenzbereichs (14), wobei der Strahlteiler (1), die mindestens erste Zylinderlinse (2) und die mindestens eine zweite Zylinderlinse (3) derart im Strahlengang des Laserstrahls (8) angeordnet sind, dass die mindestens zwei Teilstrahlen (8.1, 8.2) des Laserstrahls (8) in dem Interferenzbereich (14) miteinander derart interferieren, dass in einem Strukturbereich (16) der Probe (13) eine Struktur (9) mit linienförmigen Strukturelementen (15a) ausbildbar ist und wobei die Zylinderachse (ZA₁) der mindestens einen ersten Zylinderlinse (2) parallel zur Zylinderachse (ZA₂) der mindestens einen zweiten Zylinderlinse (3) ausgerichtet ist, wobei mindestens eine dritte Zylinderlinse (11) als Sammellinse vorgesehen ist, deren Zylinderachse (ZA₃) senkrecht zur optischen Achse ausgerichtet ist, **dadurch gekennzeichnet, dass** die Zylinderachse (ZA₃) der dritten Zylinderlinse (11) senkrecht zur Zylinderachse (ZA₁) der mindestens einen ersten Zylinderlinse (2) ausgerichtet ist.

2. Vorrichtung nach Anspruch 1, **dadurch gekennzeichnet, dass** die mindestens eine dritte Zylinderlinse (11) strahlaufwärts und/oder strahlabwärts des Strahlteilers (1) angeordnet ist, und/oder dass der Abstand des Interferenzbereichs (14) zur mindestens einen dritten Zylinderlinse (11) im Wesentlichen deren Brennweite entspricht.

3. Vorrichtung nach einem der Ansprüche 1 oder 2, **dadurch gekennzeichnet, dass** mindestens eine vierte Zylinderlinse (4, 4.1, 4.2) als Zerstreuungslinse vorgesehen ist, wobei insbesondere die Zylinderachse (ZA₄) der mindestens einen vierten Zylinderlinse (4, 4.1, 4.2) parallel zur Zylinderachse (ZA₁) der mindestens einen ersten Zylinderlinse (2) angeordnet ist, und/oder die mindestens eine vierte Zylinderlinse (4, 4.1, 4.2) strahlabwärts der mindestens einen ersten Zylinderlinse (2) angeordnet ist.

4. Vorrichtung nach Anspruch 3, **dadurch gekennzeichnet, dass** die mindestens eine vierte Zylinderlinse (4, 4.1, 4.2) in mindestens eine Achse (x, y, z) in Translation und/oder um deren Zylinderachse (ZA₄) in Rotation beweglich ist, und/oder dass jedem Teilstrahl (8.1, 8.2) genau eine vierte Zylinderlinse (4.1, 4.2) zugeordnet ist, und/oder dass mindestens zwei vierte Zylinderlinsen (4, 4.1, 4.2) unabhängig voneinander und/oder synchron zueinander beweglich sind.

5. Vorrichtung nach einem der Ansprüche 1 bis 4, **dadurch gekennzeichnet, dass** mindestens eine fünfte Zylinderlinse (5) als Sammellinse vorgesehen ist, deren Zylinderachse (ZA₅) parallel zur Zylinderachse (ZA₁) der mindestens einen ersten Zylinderlinse (2) ausgerichtet ist, und die zusammen mit der mindestens einen ersten Zylinderlinse (2) ein Linsensystem (19) ausbildet, und/oder dass mindestens eine sechste Zylinderlinse (6) als Sammellinse vorgesehen ist, deren Zylinderachse (ZA₆) parallel zur Zylinderachse (ZA₁) der mindestens einen ersten Zylinderlinse (2) ausgerichtet ist und die strahlaufwärts der mindestens einen zweiten Zylinderlinse (3) angeordnet ist, und/oder dass mindestens eine siebte Zylinderlinse (7) als Zerstreuungslinse vorgesehen ist, deren Zylinderachse (ZA₇) parallel zur Zylinderachse (ZA₁) der mindestens einen ersten Zylinderlinse (2) ausgerichtet ist und die strahlaufwärts der mindestens einen zweiten Zylinderlinse (3) angeordnet ist, wobei insbesondere die mindestens eine erste Zylinderlinse (2) mit der mindestens einen zweiten Zylinderlinse (3) und mit der mindestens einen vierten Zylinderlinse (4, 4.1, 4.2) und/oder die mindestens eine siebte Zylinderlinse (7) zusammen mit der mindestens einen zweiten Zylinderlinse (3) und der mindestens einen sechsten Zylinderlinse (6) jeweils ein Linsensystem (19) ausbilden.

6. Vorrichtung nach einem der Ansprüche 1 bis 5, **dadurch gekennzeichnet, dass** mindestens ein erstes Prisma (20) vorgesehen ist, dessen Prismenachse (PA₁) parallel zur Zylinderachse (ZA₁) der mindestens einen ersten Zylinderlinse (2) ausgerichtet ist, wobei insbesondere eine Oberfläche des mindestens einen ersten Prismas (20) normal zur optischen Achse (z) ausgerichtet ist, und/oder dass mindestens ein zweites Prisma (23, 23.1, 23.2) vorgesehen ist, dessen Prismenachse (PA₂, PA₂₁, PA₂₂) parallel zur Zylinderachse (ZA₁) der mindestens einen ersten Zylinderlinse (2) ausgerichtet ist, wobei insbesondere die Grundfläche (A₂, A₂₁, A₂₂) des mindestens einen zweiten Prismas (23, 23.1, 23.2) zusammen mit der Grundfläche (A₁) des mindestens einen ersten Prismas (20) einem Rechteck entspricht.

7. Vorrichtung nach Anspruch 6, **dadurch gekennzeichnet, dass** mindestens zwei zweite Prismen (23, 23.1, 23.2) unabhängig voneinander beweglich sind, und/oder dass das mindestens eine erste Prisma (20) und/oder das mindestens eine zweite Prisma (23, 23.1, 23.2) zwischen der mindestens einen ersten Zylinderlinse (2) und der mindestens einen zweiten Zylinderlinse (3) angeordnet sind.

8. Vorrichtung nach einem der Ansprüche 1 bis 7, **dadurch gekennzeichnet, dass** der Strahlteiler (1) und/oder mindestens eine Zylinderlinse (2, 3, 11, 4, 4.1, 4.2, 5, 6, 7) und/oder mindestens ein Prisma (20, 23, 23.1, 23.2) in Translation parallel zur optischen Achse (z) beweglich sind, und/oder dass mindestens ein Strahlaufweiter (18) zur Veränderung des Strahlquerschnitts des Laserstrahls (8) und/oder zur Veränderung der Strukturperiode (A) vorgesehen ist, wobei insbesondere der mindestens eine Strahlaufweiter (18) gebildet ist durch drei Zylinderlinsen (3, 6, 7) und/oder durch eine Zylinderlinse (3) mit einem ersten Prisma (20) und mit mindestens einem zweiten Prisma (23, 23.1, 23.2).

9. Vorrichtung nach einem der Ansprüche 1 bis 8, **dadurch gekennzeichnet, dass** der Interferenzbereich (14) ein Interferenzmuster (15) mit linienförmigen Strukturelementen (15a) aufweist, wobei insbesondere das Interferenzmuster (15) in mindestens einer Richtung (x, y) eine benutzerdefinierte, insbesondere veränderliche Strukturperiode (A) aufweist.

10. Vorrichtung nach einem der Ansprüche 1 bis 9, **dadurch gekennzeichnet, dass** eine Strahlformvorrichtung (17) vorgesehen ist, die derart ausgestaltet ist, dass das Querschnittsprofil des Laserstrahls (8) benutzerdefiniert veränderlich ist, wobei insbesondere die Strahlformvorrichtung (17) zur Ausbildung eines elliptischen oder eines mehreckigen Querschnittsprofils des Laserstrahls (8) ausgebildet ist.

11. Verfahren zur Interferenzstruktierung einer Probe (13) mit den folgenden Schritten: Bereitstellen eines Lasers (12) zur Emission eines Laserstrahls (8), Aufteilen des Laserstrahls (8) in mindestens zwei Teilstrahlen (8.1, 8.2), Anordnung mindestens einer ersten Zylinderlinse (2), Anordnung mindestens einer zweiten Zylinderlinse (3) derart, dass die mindestens zwei Teilstrahlen (8.1, 8.2) in Richtung eines Interferenzbereichs (14) derart gebrochen werden, dass die mindestens zwei Teilstrahlen (8.1, 8.2) des Laserstrahls (8) in dem Interferenzbereich (14) miteinander derart interferieren, dass in einem Strukturbereich (16) der Probe (13) eine Struktur (9) mit linienförmigen Strukturelementen (15a) ausbildbar ist und Ausrichtung der Zylinderachse (ZA₁) der mindestens einen ersten Zylinderlinse (2) parallel zur Zylinderachse (ZA₂) der mindestens einen zweiten Zylinderlinse (3), wobei das Verfahren mit einer optischen Vorrichtung (10) nach einem der Ansprüche 1 bis 10 durchgeführt wird.

12. Verwendung einer optischen Vorrichtung (10) nach einem der Ansprüche 1 bis 10 zur Interferenzstrukturierung einer Probe (13), insbesondere eines Bauteils.

## Claims

1. Optical device (10) for interference structuring of a sample (13), comprising a laser (12) for emitting a laser beam (8), a beam splitter (1) for splitting the laser beam (8) into at least two partial beams (8.1, 8.2), at least one first cylindrical lens (2), and at least one second cylindrical lens (3) for refracting the at least two partial beams (8.1, 8.2) in the direction of an interference region (14), the beam splitter (1), the at least first cylindrical lens (2), and the at least one second cylindrical lens (3) being arranged in the beam path of the laser beam (8) such that the at least two partial beams (8.1, 8.2) of the laser beam (8) interfere with one another in the interference region (14) such that a structure (9) having linear structural elements (15a) can be formed in a structure region (16) of the sample (13), and the cylinder axis (ZA₁) of the at least one first cylindrical lens (2) being oriented parallel to the cylinder axis (ZA₂) of the at least one second cylindrical lens (3), at least one third cylindrical lens (11) being provided in the form of a converging lens, the cylinder axis (ZA₃) of which is oriented perpendicular to the optical axis, **characterized in that** the cylinder axis (ZA₃) of the third cylindrical lens (11) is oriented perpendicular to the cylinder axis (ZA₁) of the at least one first cylindrical lens (2).

2. Device according to claim 1, **characterized in that** the at least one third cylindrical lens (11) is arranged upstream and/or downstream of the beam splitter (1), and/or **in that** the distance of the interference region (14) from the at least one third cylindrical lens (11) substantially corresponds to its focal length.

3. Device according to either claim 1 or claim 2, **characterized in that** at least one fourth cylindrical lens (4, 4.1, 4.2) is provided in the form of a diverging lens, in particular the cylinder axis (ZA₄) of the at least one fourth cylindrical lens (4, 4.1, 4.2) being arranged parallel to the cylinder axis (ZA₁) of the at least one first cylindrical lens (2), and/or the at least one fourth cylindrical lens (4, 4.1, 4.2) being arranged downstream of the at least one first cylindrical lens (2).

4. Device according to claim 3, **characterized in that** the at least one fourth cylindrical lens (4, 4.1, 4.2) is translatable in at least one axis (x, y, z) and/or is rotatable about its cylinder axis (ZA₄), and/or **in that** exactly a fourth cylindrical lens (4.1, 4.2) is associated with each partial beam (8.1, 8.2), and/or **in that** at least two fourth cylindrical lenses (4, 4.1, 4.2) are movable independently of one another and/or synchronously with one another.

5. Device according to any of claims 1 to 4, **characterized in that** at least one fifth cylindrical lens (5) is provided in the form of a converging lens, the cylinder axis (ZA₅) of which is oriented parallel to the cylinder axis (ZA₁) of the at least one first cylindrical lens (2), and which forms, together with the at least one first cylindrical lens (2), a lens system (19), and/or **in that** at least one sixth cylindrical lens (6) is provided in the form of a converging lens, the cylinder axis (ZA₆) of which is oriented parallel to the cylinder axis (ZA₁) of the at least one first cylindrical lens (2) and which is arranged upstream of the at least one second cylindrical lens (3), and/or **in that** at least one seventh cylindrical lens (7) is provided in the form of a diverging lens, the cylinder axis (ZA₇) of which is oriented parallel to the cylinder axis (ZA₁) of the at least one first cylindrical lens (2) and which is arranged upstream of the at least one second cylindrical lens (3), in particular the at least one first cylindrical lens (2) forming, together with the at least one second cylindrical lens (3) and with the at least one fourth cylindrical lens (4, 4.1, 4.2), and/or the at least one seventh cylindrical lens (7) forming, together with the at least one second cylindrical lens (3) and the at least one sixth cylindrical lens (6), a lens system (19) in each case.

6. Device according to any of claims 1 to 5, **characterized in that** at least one first prism (20) is provided, the prism axis (PA₁) of which is oriented parallel to the cylinder axis (ZA₁) of the at least one first cylindrical lens (2), in particular a surface of the at least one first prism (20) being oriented normal to the optical axis (z),
and/or **in that** at least one second prism (23, 23.1, 23.2) is provided, the prism axis (PA₂, PA₂₁, PA₂₂) of which is oriented parallel to the cylinder axis (ZA₁) of the at least one first cylindrical lens (2), in particular the base surface (A₂, A₂₁, A₂₂) of the at least one second prism (23, 23.1, 23.2) corresponding, together with the base surface (A₁) of the at least one first prism (20), to a rectangle.

7. Device according to claim 6, **characterized in that** at least two second prisms (23, 23.1, 23.2) are movable independently of one another, and/or **in that** the at least one first prism (20) and/or the at least one second prism (23, 23.1, 23.2) are arranged between the at least one first cylindrical lens (2) and the at least one second cylindrical lens (3).

8. Device according to any of claims 1 to 7, **characterized in that** the beam splitter (1) and/or at least one cylindrical lens (2, 3, 11, 4, 4.1, 4.2, 5, 6, 7) and/or at least one prism (20, 23, 23.1, 23.2) can be translated parallel to the optical axis (z), and/or **in that** at least one beam expander (18) for changing the beam cross section of the laser beam (8) and/or for changing the structure period (Λ) is provided, in particular the at least one beam expander (18) being formed by three cylindrical lenses (3, 6, 7) and/or by a cylindrical lens (3) together with a first prism (20) and with at least one second prism (23, 23.1, 23.2).

9. Device according to any of claims 1 to 8, **characterized in that** the interference region (14) has an interference pattern (15) having linear structural elements (15a), in particular the interference pattern (15) having a user-defined, in particular variable, structure period (Λ) in at least one direction (x, y).

10. Device according to any of claims 1 to 9, **characterized in that** a beam shaping device (17) is provided which is designed such that the cross-sectional profile of the laser beam (8) can be changed in a user-defined manner, in particular the beam shaping device (17) being designed to form an elliptical or a polygonal cross-sectional profile of the laser beam (8).

11. Method for interference structuring of a sample (13), comprising the following steps: providing a laser (12) for emitting a laser beam (8), splitting the laser beam (8) into at least two partial beams, (8.1, 8.2), arranging at least one first cylindrical lens (2), arranging at least one second cylindrical lens (3) such that the at least two partial beams (8.1, 8.2) are refracted in the direction of an interference region (14) such that the at least two partial beams (8.1, 8.2) of the laser beam (8) interfere with one another in the interference region (14) such that a structure (9) having linear structural elements (15a) can be formed in a structure region (16) of the sample (13), and orienting the cylinder axis (ZA₁) of the at least one first cylindrical lens (2) parallel to the cylinder axis (ZA₂) of the at least one second cylindrical lens (3), wherein the method is carried out using an optical device (10) according to any of claims 1 to 10.

12. Use of an optical device (10) according to any of claims 1 to 10 for interference structuring of a sample (13), in particular of a component.

## Revendications

1. Dispositif optique (10) pour la structuration par interférence d'un échantillon (13), comportant un laser (12) pour l'émission d'un faisceau laser (8), un séparateur de faisceau (1) pour la séparation du faisceau laser (8) en au moins deux faisceaux partiels (8.1, 8.2), au moins une première lentille cylindrique (2), au moins une deuxième lentille cylindrique (3) pour la réfraction des au moins deux faisceaux partiels (8.1, 8.2) en direction d'une zone d'interférence (14), dans lequel le séparateur de faisceau (1), l'au moins première lentille cylindrique (2) et l'au moins une deuxième lentille cylindrique (3) sont disposés dans le trajet de faisceau du faisceau laser (8) de telle sorte que les au moins deux faisceaux partiels (8.1, 8.2) du faisceau laser (8) interfèrent l'un avec l'autre dans la zone d'interférence (14) de telle sorte qu'une structure (9) comportant des éléments de structure (15a) de forme linéaire peut être formée dans une zone de structure (16) de l'échantillon (13) et dans lequel l'axe de cylindre (ZA₁) de l'au moins une première lentille cylindrique (2) est orienté parallèlement à l'axe de cylindre (ZA₂) de l'au moins une deuxième lentille cylindrique (3), dans lequel au moins une troisième lentille cylindrique (11) est prévue comme lentille convergente, dont l'axe de cylindre (ZA₃) est orienté perpendiculairement à l'axe optique,
**caractérisé en ce que** l'axe de cylindre (ZA₃) de la troisième lentille cylindrique (11) est orienté perpendiculairement à l'axe de cylindre (ZA₁) de l'au moins une première lentille cylindrique (2).

2. Dispositif selon la revendication 1, **caractérisé en ce que** l'au moins une troisième lentille cylindrique (11) est disposée en amont du faisceau et/ou en aval du faisceau du séparateur de faisceau (1), **et/ou en ce que** la distance entre la zone d'interférence (14) et l'au moins une troisième lentille cylindrique (11) correspond sensiblement à sa focale.

3. Dispositif selon l'une des revendications 1 ou 2, **caractérisé en ce qu'**au moins une quatrième lentille cylindrique (4, 4.1, 4.2) est prévue comme lentille divergente, dans lequel en particulier l'axe de cylindre (ZA₄) de l'au moins une quatrième lentille cylindrique (4, 4.1, 4.2) est disposé parallèlement à l'axe de cylindre (ZA₁) de l'au moins une première lentille cylindrique (2), et/ou l'au moins une quatrième lentille cylindrique (4, 4.1, 4.2) est disposée en aval du faisceau de l'au moins une première lentille cylindrique (2).

4. Dispositif selon la revendication 3, **caractérisé en ce que** l'au moins une quatrième lentille cylindrique (4, 4.1, 4.2) est mobile en translation dans au moins un axe (x, y, z) et/ou en rotation autour de son axe de cylindre (ZA₄),
**et/ou en ce qu'**exactement une quatrième lentille cylindrique (4.1, 4.2) est associée à chaque faisceau partiel (8.1, 8.2), **et/ou en ce qu'**au moins deux quatrièmes lentilles cylindriques (4, 4.1, 4.2) sont mobiles indépendamment l'une de l'autre et/ou de manière synchrone l'une par rapport à l'autre.

5. Dispositif selon l'une des revendications 1 à 4, **caractérisé en ce qu'**au moins une cinquième lentille cylindrique (5) est prévue comme lentille convergente, dont l'axe de cylindre (ZA₅) est orienté parallèlement à l'axe de cylindre (ZA₁) de l'au moins une première lentille cylindrique (2), et laquelle forme, conjointement avec l'au moins une première lentille cylindrique (2), un système de lentilles (19), **et/ou en ce qu'**au moins une sixième lentille cylindrique (6) est prévue comme lentille convergente, dont l'axe de cylindre (ZA₆) est orienté parallèlement à l'axe de cylindre (ZA₁) de l'au moins une première lentille cylindrique (2) et laquelle est disposée en amont du faisceau de l'au moins une deuxième lentille cylindrique (3), **et/ou en ce qu'**au moins une septième lentille cylindrique (7) est prévue comme lentille divergente, dont l'axe de cylindre (ZA₇) est orienté parallèlement à l'axe de cylindre (ZA₁) de l'au moins une première lentille cylindrique (2) et laquelle est disposée en amont du faisceau de l'au moins une deuxième lentille cylindrique (3), dans lequel en particulier respectivement un système de lentilles (19) est formé par l'au moins une première lentille cylindrique (2) avec l'au moins une deuxième lentille cylindrique (3) et avec l'au moins une quatrième lentille cylindrique (4, 4.1, 4.2) et/ou par l'au moins une septième lentille cylindrique (7) conjointement avec l'au moins une deuxième lentille cylindrique (3) et l'au moins une sixième lentille cylindrique (6).

6. Dispositif selon l'une des revendications 1 à 5, **caractérisé en ce qu'**au moins un premier prisme (20) est prévu, dont l'axe de prisme (PA₁) est orienté parallèlement à l'axe de cylindre (ZA₁) de l'au moins une première lentille cylindrique (2), dans lequel en particulier une surface de l'au moins un premier prisme (20) est orientée perpendiculairement à l'axe optique (z),
**et/ou en ce qu**'au moins un second prisme (23, 23.1, 23.2) est prévu, dont l'axe de prisme (PA₂, PA₂₁, PA₂₂) est orienté parallèlement à l'axe de cylindre (ZA₁) de l'au moins une première lentille cylindrique (2), dans lequel en particulier la surface de base (A₂, A₂₁, A₂₂) de l'au moins un second prisme (23, 23.1, 23.2) correspond, conjointement avec la surface de base (A₁) de l'au moins un premier prisme (20), à un rectangle.

7. Dispositif selon la revendication 6, **caractérisé en ce qu'**au moins deux seconds prismes (23, 23.1, 23.2) sont mobiles indépendamment l'un de l'autre, **et/ou en ce que** l'au moins un premier prisme (20) et/ou l'au moins un second prisme (23, 23.1, 23.2) sont disposés entre l'au moins une première lentille cylindrique (2) et l'au moins une deuxième lentille cylindrique (3).

8. Dispositif selon l'une des revendications 1 à 7, **caractérisé en ce que** le séparateur de faisceau (1) et/ou au moins une lentille cylindrique (2, 3, 11, 4, 4.1, 4.2, 5, 6, 7) et/ou au moins un prisme (20, 23, 23.1, 23.2) sont mobiles en translation parallèlement à l'axe optique (z), **et/ou en ce qu'**au moins un élargisseur de faisceau (18) est prévu pour la modification de la section transversale de faisceau du faisceau laser (8) et/ou pour la modification de la période de structure (Λ), dans lequel en particulier l'au moins un élargisseur de faisceau (18) est formé par trois lentilles cylindriques (3, 6, 7) et/ou par une lentille cylindrique (3) comportant un premier prisme (20) et comportant au moins un second prisme (23, 23.1, 23.2).

9. Dispositif selon l'une des revendications 1 à 8, **caractérisé en ce que** la zone d'interférence (14) présente un motif d'interférence (15) comportant des éléments de structure (15a) de forme linéaire, dans lequel en particulier le motif d'interférence (15) présente, dans au moins une direction (x, y), une période de structure (Λ) définie par l'utilisateur, en particulier modifiable.

10. Dispositif selon l'une des revendications 1 à 9, **caractérisé en ce qu'**un dispositif de formation de faisceau (17) est prévu, lequel est configuré de telle sorte que le profil de section transversale du faisceau laser (8) peut être modifié de manière définie par l'utilisateur, dans lequel en particulier le dispositif de formation de faisceau (17) est configuré pour la formation d'un profil de section transversale elliptique ou d'un profil de section transversale polygonal du faisceau laser (8).

11. Procédé permettant la structuration par interférence d'un échantillon (13) comportant les étapes suivantes : fourniture d'un laser (12) pour l'émission d'un faisceau laser (8), séparation du faisceau laser (8) en au moins deux faisceaux partiels (8.1, 8.2), disposition d'au moins une première lentille cylindrique (2), disposition d'au moins une deuxième lentille cylindrique (3) de telle sorte que les au moins deux faisceaux partiels (8.1, 8.2) sont réfractés en direction d'une zone d'interférence (14), de telle sorte que les au moins deux faisceaux partiels (8.1, 8.2) du faisceau laser (8) interfèrent l'un avec l'autre dans la zone d'interférence (14), de telle sorte qu'une structure (9) comportant des éléments de structure (15a) de forme linéaire peut être formée dans une zone de structure (16) de l'échantillon (13), et orientation de l'axe de cylindre (ZA₁) de l'au moins une première lentille cylindrique (2) parallèlement à l'axe de cylindre (ZA₂) de l'au moins une deuxième lentille cylindrique (3), dans lequel le procédé est réalisé avec un dispositif optique (10) selon l'une des revendications 1 à 10.

12. Utilisation d'un dispositif optique (10) selon l'une des revendications 1 à 10 pour la structuration par interférence d'un échantillon (13), en particulier d'un composant.
